# FASCICULE DE BREVET EUROPEEN

(11) **EP 4 045 337 B1**
(45) Date de publication et mention de la délivrance du brevet: **07.06.2023**
(21) Numéro de dépôt: 20797827.1
(22) Date de dépôt: 09.10.2020
(51) Int. Cl.: B60C 9/22, B60C 9/00

(54) **PNEUMATIQUE A FAIBLE RESISTANCE AU ROULEMENT ET SON PROCEDE DE FABRICATION**
REIFEN MIT NIEDRIGEM ROLLWIDERSTAND UND VERFAHREN ZU SEINER HERSTELLUNG
TYRE WITH LOW ROLLING RESISTANCE AND METHOD FOR PRODUCING SAME

(30) Priorité: 16.10.2019 FR 1911527
(43) Date de publication de la demande: 24.08.2022
(73) Titulaire: COMPAGNIE GENERALE DES ETABLISSEMENTS MICHELIN, 63000 Clermont-Ferrand (FR)
(72) Inventeur: ROTY, Gael, 63040 CLERMONT-FERRAND Cedex 9 (FR); CORNILLE, Richard, 63040 CLERMONT-FERRAND Cedex 9 (FR); RIH, Sabrina, 63040 CLERMONT-FERRAND Cedex 9 (FR)
(74) Mandataire: Desbordes, Guillaume
(86) Numéro de dépôt international: PCT/FR2020/051793
(87) Numéro de publication internationale: WO 2021/074511

(56) Documents cités:
- EP-A1- 2 551 127
- EP-A1- 2 783 842
- EP-A1- 3 050 719
- EP-A1- 3 135 465
- EP-A1- 3 180 466
- WO-A1-2012/146612
- WO-A1-2015/019214

## Description

La présente invention est relative à un pneumatique et à un procédé de fabrication d'un tel pneumatique.

On connait de l'état de la technique, notamment de WO2019/122621 et WO2019/180367 des pneumatiques comprenant un sommet, deux flancs, deux bourrelets, chaque flanc reliant chaque bourrelet au sommet. Chaque bourrelet comprend au moins un élément de renfort circonférentiel, généralement sous la forme d'une tringle.

Le pneumatique comprend également une armature de carcasse ancrée dans chaque bourrelet et s'étendant dans chaque flanc et dans le sommet. L'armature de carcasse comprend une unique couche de carcasse comprenant une portion enroulée autour de chaque élément de renfort circonférentiel.

Le sommet comprend une bande de roulement destinée à venir en contact avec un sol lors du roulage du pneumatique ainsi qu'une armature de sommet agencée radialement entre la bande de roulement et l'armature de carcasse. L'armature de sommet comprend une armature de travail comprenant une unique couche de travail.

L'armature de sommet comprend également une armature de frettage agencée radialement à l'extérieur de l'armature de travail, l'armature de frettage étant délimitée axialement par deux bords axiaux et comprenant au moins un élément de renfort filaire de frettage enroulé circonférentiellement hélicoïdalement de façon à s'étendre axialement d'un bord axial à l'autre bord axial de l'armature de frettage selon une direction principale du ou de chaque élément de renfort filaire de frettage.

Comme décrit ci-dessus, la particularité des pneumatiques décrits dans WO2019/122621 et WO2019/180367 est de supprimer une couche de travail par rapport à un pneumatique classique dans lequel l'armature de travail comprend deux couches de travail. Dans un tel pneumatique classique, chaque couche de travail est délimitée axialement par deux bords axiaux de ladite couche de travail et comprend des éléments de renfort filaires de travail s'étendant axialement d'un bord axial à l'autre bord axial de ladite couche de travail les uns sensiblement parallèlement aux autres selon une direction principale des éléments de renfort filaires de travail formant, avec la direction circonférentielle du pneumatique, un angle, en valeur absolue, strictement supérieur à 10°, par exemple égal à 26°. La direction principale de chaque élément de renfort filaire de travail d'une des couches de travail et la direction principale de chaque élément de renfort filaire de travail de l'autre des couches de travail forment, avec la direction circonférentielle du pneumatique, dans la portion du pneumatique délimitée axialement par les bords axiaux de l'armature de travail, des angles d'orientations opposées, soit ici +26° et -26°.

Néanmoins, les pneumatiques décrits dans WO2019/122621 et WO2019/180367 présentent une résistance au roulement perfectible.

L'invention a pour but d'améliorer la résistance au roulement d'un tel pneumatique.

D'autres pneumatiques sont connus de EP3135465A1 et EP2783842A1.

### PNEUMATIQUE SELON L'INVENTION

A cet effet, l'invention a pour objet un pneumatique comprenant un sommet, deux flancs, deux bourrelets, chaque flanc reliant chaque bourrelet au sommet, le pneumatique comprenant une armature de carcasse ancrée dans chaque bourrelet et s'étendant dans chaque flanc et radialement intérieurement au sommet, l'armature de carcasse comprenant une couche de carcasse, le sommet comprenant :
- une bande de roulement destinée à venir en contact avec un sol lors du roulage du pneumatique,
- une armature de sommet agencée radialement entre la bande de roulement et l'armature de carcasse, l'armature de sommet comprenant :
- une armature de travail comprenant une unique couche de travail,
- une armature de frettage agencée radialement à l'extérieur de l'armature de travail, l'armature de frettage étant délimitée axialement par deux bords axiaux de l'armature de frettage et comprenant au moins un élément de renfort filaire de frettage enroulé circonférentiellement hélicoïdalement de façon à s'étendre axialement d'un bord axial à l'autre bord axial de l'armature de frettage.

Conformément à l'invention, le ou chaque élément de renfort filaire de frettage est constitué :
- de deux brins multifilamentaires de polyamide aromatique ou copolyamide aromatique et d'un brin multifilamentaire de polyamide aliphatique ou de polyester, ou
- de trois brins multifilamentaires de polyester,
chaque brin multifilamentaire étant enroulé en hélice autour d'un axe principal commun aux trois brins multifilamentaires.

Toujours conformément à l'invention, l'armature de frettage présente un module tangent à 1,3% d'allongement allant de 200 à 650 daN/mm.

Le pneumatique selon l'invention présente une résistance au roulement améliorée, c'est-à-dire inférieure à celles des pneumatiques de l'état de la technique. Aux fins de leurs recherches, les inventeurs à l'origine de l'invention ont déterminé que le module tangent à 1,3% d'allongement était représentatif du fonctionnement du pneumatique pour ce qui est de la résistance au roulement d'un pneumatique comprenant une unique nappe de travail. La pertinence de ce module tangent à 1,3% d'allongement est démontrée dans la partie relative aux tests comparatifs.

Les pneumatiques décrits dans WO2019/122621 comprennent une armature de frettage présentant un module tangent à 1,3% d'allongement relativement faible et en tout cas inférieur à 200 daN/mm. Les inventeurs ont déterminé que, dans un pneumatique à unique couche de travail, un module tangent à 1,3% d'allongement trop faible ne permettait pas d'assurer une fonction de frettage suffisante et ce d'autant plus que la présence d'une seule couche de travail abaissait encore davantage la capacité de frettage de l'armature de sommet par rapport à un pneumatique classique comprenant deux couches de travail. Un module tangent à 1,3% d'allongement relativement faible rend l'armature de sommet du pneumatique trop dissipative et donc augmente la résistance au roulement du pneumatique. Au contraire, le pneumatique selon l'invention présente un module tangent à 1,3% d'allongement suffisamment élevé pour permettre un frettage suffisant du pneumatique et ce malgré la présence d'une unique couche de travail.

Les pneumatiques décrits dans WO2019/180367 comprennent une armature de frettage présentant un module tangent à 1,3% d'allongement relativement élevé et en tout cas supérieur à 650 daN/mm. Les inventeurs ont déterminé que, dans un pneumatique à unique couche de travail, un module tangent à 1,3% d'allongement trop élevé empêchait la bonne mise à plat du pneumatique. En effet, un module tangent à 1,3% d'allongement relativement élevé rend l'armature de sommet du pneumatique tellement rigide qu'il est alors nécessaire d'appliquer un effort relativement élevé sur le cette armature de sommet pour assurer une bonne mise à plat du pneumatique. Un tel effort génère des efforts de cisaillement dans les matériaux, par exemple les matrices élastomériques, présents à proximités des bords axiaux de l'armature de frettage pour mettre à plat le pneumatique. Ces cisaillements entrainent une dissipation supplémentaire ce qui augmente la résistance au roulement du pneumatique. Au contraire, le pneumatique selon l'invention présente un module tangent à 1,3% d'allongement suffisamment élevé mais modéré pour permettre une bonne mise à plat du pneumatique et ce malgré la présence d'une unique couche de travail.

Une caractéristique essentielle de l'invention est d'utiliser des éléments de renfort filaire de frettage constitués par trois brins multifilamentaires enroulés ensemble en hélice autour d'un axe commun. En effet, de tels éléments de renfort filaires ne nécessitent qu'au plus deux étapes de mise en torsion ce qui permet un procédé de fabrication rapide et peu coûteux. Au contraire, les éléments de renfort filaire de frettage décrits dans WO2019/122621 nécessitent une étape de mise en torsion de chaque brin d'âme et de couche ainsi qu'une étape de mise en torsion des brins d'âme et de couche ensemble, ce qui rend soit le procédé relativement long soit nécessitant un nombre élevé de moyens de mise en torsion. Quant aux éléments de renfort filaire de frettage décrits dans WO2019/180367, il est nécessaire de mettre en oeuvre trois étapes de mises en torsion successives et ce, sur un nombre important de moyens de mise en torsion, ce qui rend le procédé à la fois long et nécessitant un nombre élevé de moyens de mise en torsion.

En outre, les inventeurs à l'origine de l'invention ont identifié que, contrairement à un pneumatique comprenant deux couches de travail dans lequel l'armature de frettage assure exclusivement la fonction de frettage de l'armature de sommet du pneumatique, l'armature de frettage du pneumatique selon l'invention doit assurer, en plus de sa fonction de frettage, d'autres fonctions comme par exemple assurer la reprise d'une plus grande proportion des tensions circonférentielles du pneumatique au gonflage, au roulage et en centrifugation, ainsi qu'assurer une plus grande contribution à la fonction de guidage du pneumatique au travers de sa rigidité de dérive. Afin d'assurer ces autres fonctions, il est nécessaire de disposer d'un élément de renfort filaire de frettage présentant une courbe force-allongement que l'on peut ajuster en fonction du compromis de performances souhaité pour le pneumatique. Chaque élément de renfort filaire de frettage constitué de trois brins présente une courbe force-allongement pouvant être ajustée en modifiant un ou plusieurs paramètres choisis parmi au moins quatre paramètres que sont le titre de chaque brin multifilamentaire et la torsion de ces brins multifilamentaires pour former l'élément de renfort filaire de frettage. Au contraire, la courbe force-allongement d'un élément de renfort filaire de frettage constitué de deux brins multifilamentaires ne pourrait être aussi bien ajustée dans la mesure où on ne peut modifier qu'un nombre plus réduit de paramètres.

Conformément à l'invention, l'armature de travail comprend une unique couche de travail. La présence d'une unique couche de travail permet notamment d'alléger le pneumatique, donc de réduire l'énergie dissipée par hystérèse du sommet et donc de réduire la résistance au roulement du pneumatique. Ainsi, l'armature de travail est, à l'exception de la couche de travail, dépourvue de toute couche renforcée par des éléments de renfort filaires. Les éléments de renfort filaires de telles couches renforcées exclues de l'armature de travail du pneumatique comprennent les éléments de renfort filaires métalliques et les éléments de renfort filaires textiles. De façon très préférentielle, l'armature de travail est constituée par l'unique couche de travail.

Dans le pneumatique selon l'invention, l'armature de frettage est radialement intercalée entre l'armature de travail et la bande de roulement.

Chaque brin multifilamentaire comprend plusieurs monofilaments, les monofilaments présentent typiquement des diamètres allant de 2 à 30 µm. Chaque brin multifilamentaire de monofilaments comprend au moins 2 filaments élémentaires, typiquement plus de 10 filaments élémentaires, de préférence plus de 100 filaments élémentaires et plus préférentiellement plus de 200 filaments élémentaires. Un monofilament est réalisé dans un matériau donné et désigne un filament monolithique issu, par exemple du filage de ce matériau, par exemple par filage au fondu, filage en solution ou filage de gel.

Par brin multifilamentaire en polyamide aromatique ou copolyamide aromatique, on comprend un brin multifilamentaire constitué de monofilaments de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les para-aramides (ou poly(paraphénylène téréphtalamide ou PA PPD-T notamment connu sous la dénomination commerciale Kevlar de la société Du Pont de Nemours ou Twaron de la société Teijin).

Par brin multifilamentaire en polyester, on comprend un brin multifilamentaire constitué de monofilaments de macromolécules linéaires formées de groupes liés entre eux par des liaisons esters. Les polyesters sont fabriqués par polycondensation par estérification entre un diacide carboxylique ou l'un de ses dérivés et un diol. Par exemple, le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par brin multifilamentaire en polyamide aliphatique, on comprend un brin multifilamentaire constitué de monofilaments de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

On calcule le module tangent à 1,3 % d'allongement de l'armature de frettage à partir d'une courbe force-allongement obtenue en appliquant la norme ASTM D 885/D 885M - 10a de 2014 à un élément de renfort filaire de frettage extrait du pneumatique ou à un élément de renfort filaire de frettage adhérisé avant incorporation dans une matrice élastomérique. De cette courbe force-allongement de l'élément de renfort filaire de frettage, on déduit le module tangent de l'élément de renfort filaire de frettage, exprimé en daN/% en calculant la dérivée de la courbe au point d'allongement égal à 1,3%. On obtient le module tangent à 1,3 % d'allongement de l'armature de frettage, exprimé en daN/mm en multipliant le module tangent de l'élément de renfort filaire de frettage par la densité axiale moyenne d'élément(s) de renfort filaire(s) de frettage. La densité axiale moyenne d'élément(s) de renfort filaire(s) de frettage est égale, dans le cas d'un unique élément de renfort filaire de frettage au nombre moyen de tours de l'élément de renfort filaire de frettage par mm d'armature de frettage ou, dans le cas de plusieurs éléments de renfort filaires de frettage, au nombre moyen d'éléments de renfort filaires de frettage par mm d'armature de frettage. La densité axiale moyenne d'élément(s) de renfort filaire(s) de frettage est déterminée selon la direction axiale du pneumatique. La détermination de la densité axiale d'élément(s) de renfort filaire(s) de frettage se fait sur une largeur axiale correspondant à 50% de la largeur axiale du pneumatique, cette largeur axiale étant axialement centrée sur le plan médian du pneumatique. Ainsi, la densité axiale moyenne d'élément(s) de renfort filaire(s) de frettage prend en compte les éventuelles superpositions radiales de plusieurs éléments de renfort filaires de frettage, par exemple consécutives à un tuilage ou bien consécutives à la présence de deux couches de frettage radialement superposées dans l'armature de frettage. La densité axiale moyenne d'élément(s) de renfort filaire(s) de frettage ne prend pas en compte les éventuelles superpositions radiales de plusieurs éléments de renfort filaires de frettage dans les portions axialement extérieures du pneumatique, c'est-à-dire situées hors de la portion centrale centrée axialement sur le plan médian du pneumatique et présentant une largeur axiale égale à 50% de la largeur axiale du pneumatique.

Les pneumatiques de l'invention sont préférentiellement destinés à des véhicules de tourisme. Un tel pneumatique présente une section dans un plan de coupe méridien caractérisée par une largeur de section S et une hauteur de section H, au sens de la norme de la European Tyre and Rim Technical Organisation ou « ETRTO », telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Par direction axiale, on entend la direction sensiblement parallèle à l'axe principal du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend la surface cylindrique théorique passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Par direction principale selon laquelle un élément de renfort filaire s'étend, on comprend la direction selon laquelle l'élément de renfort filaire s'étend selon sa plus grande longueur. La direction principale selon laquelle un élément de renfort filaire s'étend peut être rectiligne ou courbe, l'élément de renfort pouvant décrire le long de sa direction principale une trajectoire rectiligne ou bien ondulée.

Par portion de l'assemblage, d'une couche ou du pneumatique comprise axialement entre les bords axiaux d'un ensemble enroulé ou d'une couche ou d'une armature, on comprend une portion de l'assemblage, de la couche ou du pneumatique s'étendant axialement et comprise entre les plans radiaux passant par les bords axiaux de l'ensemble enroulé ou de la couche ou de l'armature.

Par portion d'un ensemble enroulé destinée à s'étendre axialement, portion d'un ensemble enroulé s'étendant axialement ou portion d'une couche s'étendant axialement à l'aplomb radial d'un ensemble de référence ou d'une couche de référence, on comprend une portion dudit ensemble ou de ladite couche comprise entre les projections radiale des bords axiaux de l'ensemble de référence ou de la couche de référence sur ledit ensemble ou ladite couche.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le pneumatique, l'angle considéré est l'angle, en valeur absolue, le plus petit des deux angles définis entre la droite de référence, ici la direction circonférentielle du pneumatique, et la direction principale selon laquelle l'élément de renfort filaire considéré s'étend.

Dans le pneumatique et lors du procédé, par orientation d'un angle, on entend le sens, horaire ou anti-horaire, dans lequel il faut tourner depuis la droite de référence, ici la direction circonférentielle du support ou du pneumatique, définissant l'angle pour atteindre la direction principale selon laquelle l'élément de renfort filaire considéré s'étend.

Lors du procédé, les angles considérés formés par les directions principales selon lesquelles s'étendent les éléments de renfort filaires de travail et de carcasse sont par convention des angles d'orientations opposées et l'angle formé par la direction principale selon laquelle s'étend chaque élément de renfort filaire de travail est, en valeur absolue, le plus petit des deux angles définis entre la droite de référence, ici la direction circonférentielle du support ou du pneumatique et la direction principale selon laquelle l'élément de renfort filaire de travail s'étend. Ainsi, l'angle formé par la direction principale selon laquelle s'étend chaque élément de renfort filaire de travail définit une orientation qui est opposée à celle formée par l'angle de la direction principale selon laquelle s'étend chaque élément de renfort filaire de carcasse.

Dans la variante dans laquelle le ou chaque élément de renfort filaire de frettage est constitué de deux brins multifilamentaires de polyamide aromatique ou copolyamide aromatique et d'un brin multifilamentaire de polyamide aliphatique ou de polyester, on pourra envisager les caractéristiques suivantes de façon indépendantes, et préférentiellement en combinaison les unes avec les autres :
- le titre de chaque brin multifilamentaire de polyamide aromatique ou de copolyamide aromatique va de 150 tex à 350 tex,
- le titre de chaque brin multifilamentaire de polyamide aliphatique ou de polyester va de 120 tex à 250 tex,
- la torsion d'assemblage des trois brins multifilamentaires autour de l'axe principal commun va de 150 tours par mètre à 400 tours par mètre.

Avantageusement, dans la variante dans laquelle le ou chaque élément de renfort filaire de frettage est constitué de deux brins multifilamentaires de polyamide aromatique ou copolyamide aromatique et d'un brin multifilamentaire de polyamide aliphatique ou de polyester, le coefficient de torsion K du ou de chaque élément de renfort filaire de frettage défini par la relation K=R × [(T / (1000.ρ)]1/2 dans laquelle R est la torsion d'assemblage des trois brins multifilamentaires autour de l'axe principal commun, exprimée en tours par mètre, T est le titre total du ou de chaque élément de renfort filaire de frettage exprimé en tex, et ρ est la densité moyenne du matériau constitutif du ou de chaque élément de renfort filaire de frettage, va de 140 à 260, de préférence de 180 à 220 et encore plus préférentiellement de 205 à 220. Par densité moyenne, on entend la densité de chaque brin multifilamentaire pondérée par son titre.

Dans la variante dans laquelle le ou chaque élément de renfort filaire de frettage est constitué de trois brins multifilamentaires de polyester, on pourra envisager les caractéristiques suivantes de façon indépendantes, et préférentiellement en combinaison les unes avec les autres :
- le titre de chaque brin multifilamentaire de polyester va de 300 tex à 500 tex,
- la torsion d'assemblage des trois brins multifilamentaires autour de l'axe principal commun va de 100 tours par mètre à 250 tours par mètre.

Avantageusement, dans la variante dans laquelle le ou chaque élément de renfort filaire de frettage est constitué de trois brins multifilamentaires de polyester, le coefficient de torsion K du ou de chaque élément de renfort filaire de frettage défini par la relation K=R x [(T / (1000.ρ)]1/2 dans laquelle R est la torsion d'enroulage des trois brins multifilamentaires autour de l'axe principal commun, exprimée en tours par mètre, T est le titre total du ou de chaque élément de renfort filaire de frettage exprimé en tex, et ρ est la densité du polyester constitutif du ou de chaque élément de renfort filaire de frettage, va de 120 à 260, de préférence de 130 à 200 et encore plus préférentiellement de 130 à 160.

Les torsions et le titre (ou densité linéique) de chaque brin sont déterminés selon la norme ASTM D 885/D 885M - 10a de 2014. Le titre est donné en tex (poids en grammes de 1000 m de produit - rappel: 0, 111 tex égal à 1 denier).

Quelle que soit la variante envisagée, le ou chaque élément de renfort filaire de frettage est préférentiellement équilibré en torsion. Par équilibré en torsion, on entend que tous les monofilaments présentent une torsion identique autour de leur propre axe, quel que soit le brin multifilamentaire auquel ils appartiennent. Afin d'obtenir un tel élément de renfort filaire de frettage équilibré en torsion, le ou chaque élément de renfort filaire de frettage est obtenu par un procédé comprenant les étapes suivantes :
- une étape de torsion de chaque brin multifilamentaire selon un nombre de tours par mètre N1 dans un premier sens de torsion,
- une étape d'assemblage par torsion des trois brins multifilamentaires selon un nombre de tours par mètre N2 dans un deuxième sens de torsion opposé au premier sens de torsion autour de l'axe principal commun. De préférence, N1=N2 afin que chaque monofilament présente une torsion sensiblement nulle autour de son propre axe.

Dans un mode de réalisation particulièrement préféré permettant d'avoir plus de moyens d'ajustement de la courbe force-allongement du ou de chaque élément de renfort filaire de frettage, le ou chaque élément de renfort filaire de frettage est constitué de deux brins multifilamentaires de polyamide aromatique ou copolyamide aromatique et d'un brin multifilamentaire de polyamide aliphatique ou de polyester, chaque brin multifilamentaire étant enroulé en hélice autour d'un axe principal commun aux trois brins multifilamentaires. En effet, d'une part, grâce à deux matériaux différents, il est plus facile de pouvoir ajuster les propriétés mécaniques du ou de chaque élément de renfort filaire de frettage. D'autre part, le pneumatique selon l'invention n'ayant qu'une unique couche de travail, l'armature de frettage est bien plus sollicitée que dans un pneumatique comprenant deux couches de frettage. Ainsi, un élément de renfort filaire de frettage comprenant deux brins multifilamentaires de polyamide aromatique ou copolyamide aromatique permet de reprendre d'avantage d'efforts et ainsi compenser la perte d'une couche de travail.

Ainsi, de façon encore plus préférée, le rapport du titre total, exprimé en tex, de polyamide aromatique ou copolyamide aromatique sur le titre total, exprimé en tex, du ou de chaque élément de renfort filaire de frettage va de 0,60 à 0,90, de préférence de 0,65 à 0,80.

Avantageusement, afin d'assurer un frettage amélioré du pneumatique, l'armature de frettage présente un module tangent à 1,3% d'allongement supérieur ou égal à 220 daN/mm.

Avantageusement, afin d'améliorer encore davantage la mise à plat du pneumatique, l'armature de frettage présente un module tangent à 1,3% d'allongement inférieur ou égal à 600 daN/mm, de préférence inférieur ou égal à 500 daN/mm.

Dans un mode de réalisation permettant d'atteindre le volume attendu du pneumatique et surtout, de contenir la prise de volume lors du gonflage du pneumatique, l'armature de frettage développe, sous une force égale à 2 daN/mm, un module tangent allant de 150 à 400 daN/mm.

Les inventeurs à l'origine de l'invention ont également identifié que le module tangent sous une force égale à 2 daN/mm était représentatif de la force appliquée sur l'armature de frettage d'un pneumatique comprenant une unique nappe de travail lors du gonflage de ce dernier. La pertinence de ce module tangent sous une force égale à 2 daN/mm d'allongement est démontrée dans la partie relative aux tests comparatifs.

On calcule le module tangent sous une force égale à 2 daN/mm à partir d'une courbe force-allongement obtenue en appliquant la norme ASTM D 885/D 885M - 10a de 2014 à un élément de renfort filaire de frettage de l'armature de frettage. On détermine également la densité axiale d'élément(s) de renfort filaire(s) de frettage par mm d'armature de frettage. Cette densité axiale est déterminée selon la direction axiale du pneumatique. Puis, en divisant 2 daN/mm par la densité axiale d'élément(s) de renfort filaire(s) de frettage par mm d'armature de frettage, on obtient la force pour l'élément de renfort filaire de frettage équivalente à la force de 2 daN/mm de l'armature de frettage. On déduit le module tangent M2'D de l'élément de renfort filaire de frettage, exprimé en daN/% en calculant la dérivée de la courbe au point de cette force équivalente puis on en déduit le module tangent M2D de l'armature de frettage, exprimé en daN/.mm en multipliant le module tangent M2'D par la densité axiale d'élément(s) de renfort filaire(s) de frettage par mm d'armature de frettage.

Les inventeurs ont déterminé, que dans un pneumatique à unique couche de travail, une armature de frettage développant, sous une force égale à 2 daN/mm, un module tangent trop faible ne permettait pas de créer une armature de frettage assurant une fonction de frettage suffisante et ce d'autant plus que la seule couche de travail abaissait encore davantage la capacité de frettage de l'armature de sommet par rapport à un pneumatique classique comprenant deux couches de travail. Une conséquence importante est qu'avec un module tangent trop faible, l'armature de frettage d'un pneumatique à unique couche de travail ne permet pas de contenir son volume lors de la mise sous pression du pneumatique. Les dimensions extérieures alors atteintes par le pneumatique seraient alors significativement différentes des dimensions attendues et permettant d'obtenir les performances escomptées du pneumatique.

Les inventeurs ont également déterminé, que dans un pneumatique à unique couche de travail, une nappe de frettage développant, sous une force égale à 2 daN/mm, un module tangent trop élevé pouvait entrainer une pénétration radialement vers l'intérieur du ou de chaque élément de renfort filaire de frettage lors de l'étape de moulage.

Avantageusement, afin d'améliorer le frettage du pneumatique, l'armature de frettage développe, sous une force égale à 2 daN/mm, un module tangent supérieur ou égal à 200 daN/mm.

Avantageusement, afin de réduire les risque de pénétration du ou de chaque élément de renfort filaire de frettage dans l'armature de travail, l'armature de frettage développe, sous une force égale à 2 daN/mm, un module tangent inférieur ou égal à 350 daN/mm.

Avantageusement, afin d'améliorer les performances du pneumatique, notamment en rigidité de dérive et à haute vitesse, le ou chaque élément de renfort filaire de frettage s'étend axialement d'un bord axial à l'autre bord axial de l'armature de frettage selon une direction principale du ou de chaque élément de renfort filaire de frettage formant, avec la direction circonférentielle du pneumatique, un angle, en valeur absolue, inférieur ou égal à 10°, de préférence inférieur ou égal à 7° et plus préférentiellement inférieur ou égal à 5°.

De façon avantageuse, la couche de travail est délimitée axialement par deux bords axiaux de la couche de travail et comprend des éléments de renfort filaires de travail s'étendant axialement d'un bord axial à l'autre bord axial de la couche de travail les uns sensiblement parallèlement aux autres selon une direction principale de chaque élément de renfort filaire de travail, la direction principale de chaque élément de renfort filaire de travail de la couche de travail formant, avec la direction circonférentielle du pneumatique, un angle, en valeur absolue, strictement supérieur à 10°, de préférence allant de 15° à 50° et plus préférentiellement de 18° à 30°.

Dans un mode de réalisation avantageux permettant de conserver les avantages d'un pneumatique dans lequel les éléments de renfort filaire de carcasse s'étendent sensiblement radialement dans chaque flanc et présentant une armature de sommet présentant un maillage triangulaire, la ou chaque couche de carcasse est délimitée axialement par deux bords axiaux de la ou chaque couche de carcasse et comprend des éléments de renfort filaires de carcasse s'étendant axialement d'un bord axial à l'autre bord axial de la ou chaque couche de carcasse, chaque élément de renfort filaire de carcasse s'étendant selon une direction principale de chaque élément de renfort filaire de carcasse, la direction principale de chaque élément de renfort filaire de carcasse de la ou chaque couche de carcasse formant, avec la direction circonférentielle du pneumatique:
- un angle, en valeur absolue, strictement inférieur à 80° dans une portion de la couche de carcasse s'étendant axialement à l'aplomb radial de la couche de travail,
- un angle, en valeur absolue, allant de 80° à 90° dans au moins une portion de la couche de carcasse s'étendant radialement dans chaque flanc.

Dans une variante de ce mode de réalisation dans lequel l'angle de chaque élément de renfort filaire de carcasse diffère entre le flanc et à l'aplomb radial de la couche de travail, l'armature de carcasse comprend une unique couche de carcasse. Dans cette variante, l'armature de carcasse est, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

Dans une autre variante de ce mode de réalisation dans lequel l'angle de chaque élément de renfort filaire de carcasse diffère entre le flanc et à l'aplomb radial de la couche de travail, l'armature de carcasse comprend deux couches de carcasse, les directions principales des éléments de renfort filaires de carcasse des deux couches de carcasse étant sensiblement parallèles les unes aux autres.

Dans des modes de réalisation dans lesquels la direction principale de chaque élément de renfort filaire de carcasse présente, entre les portions, des zones de transition où l'angle est sensiblement variable, la portion de la ou chaque couche de carcasse s'étendant axialement à l'aplomb de la couche de travail et dans laquelle la direction principale de chaque élément de renfort filaire de carcasse forme, avec la direction circonférentielle du pneumatique, un angle, en valeur absolue, strictement inférieur à 80° présente une largeur axiale égale à au moins 40%, de préférence au moins 50% de la largeur axiale de la couche de travail.

Dans des modes de réalisation dans lesquels la direction principale de chaque élément de renfort filaire de carcasse présente, entre les portions, des zones de transition où l'angle est sensiblement variable, la portion de la ou chaque couche de carcasse s'étendant axialement à l'aplomb de la couche de travail et dans laquelle la direction principale de chaque élément de renfort filaire de carcasse forme, avec la direction circonférentielle du pneumatique, un angle, en valeur absolue, strictement inférieur à 80° présente une largeur axiale égale à au plus 90%, de préférence au plus 80% de la largeur axiale de la couche de travail.

De préférence, le plan médian du pneumatique coupe cette portion de la ou chaque couche de carcasse s'étendant axialement à l'aplomb de la couche de travail. Plus préférentiellement, cette portion de la ou chaque couche de carcasse s'étendant axialement à l'aplomb de la couche de travail est centrée axialement sur le plan médian du pneumatique.

Dans des modes de réalisation dans lesquels la direction principale de chaque élément de renfort filaire de carcasse présente, entre les portions, des zones de transition où l'angle est sensiblement variable, chaque portion de la ou chaque couche de carcasse s'étendant radialement dans chaque flanc et dans laquelle la direction principale de chaque élément de renfort filaire de carcasse forme, avec la direction circonférentielle du pneumatique, un angle, en valeur absolue, allant de 80° à 90° présente une hauteur radiale égale à au moins 5%, de préférence au moins 15% et plus préférentiellement au moins 30% de la hauteur radiale du pneumatique.

Dans des modes de réalisation dans lesquels la direction principale de chaque élément de renfort filaire de carcasse présente, entre les portions, des zones de transition où l'angle est sensiblement variable, chaque portion de la ou chaque couche de carcasse s'étendant radialement dans chaque flanc et dans laquelle la direction principale de chaque élément de renfort filaire de carcasse forme, avec la direction circonférentielle du pneumatique, un angle, en valeur absolue, allant de 80° à 90° présente une hauteur radiale égale à au plus 80%, de préférence au plus 70% et plus préférentiellement au plus 60% de la hauteur radiale du pneumatique.

De préférence, le plan circonférentiel équatorial du pneumatique coupe chacune de ces portions de la ou chaque couche de carcasse située dans chaque flanc.

Dans le mode de réalisation dans lequel l'angle de chaque élément de renfort filaire de carcasse diffère entre le flanc et à l'aplomb radial de la couche de travail, un compromis préférentiel de performances du pneumatique est obtenu lorsque la direction principale de chaque élément de renfort filaire de carcasse forme, avec la direction circonférentielle du pneumatique, un angle, en valeur absolue, supérieur ou égal à 10°, de préférence allant de 20° à 75° et plus préférentiellement allant de 35° à 70°, dans la portion de la couche de carcasse s'étendant axialement à l'aplomb radial de la couche de travail.

Dans le pneumatique selon l'invention, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une couche d'un matériau polymérique, de préférence élastomérique ou bien constituée d'un empilement de plusieurs couches, chaque couche étant constituée d'un matériau polymérique, de préférence élastomérique.

Dans un mode de réalisation avantageux, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort filaires. Les éléments de renfort filaires de telles armatures exclues de l'armature de sommet du pneumatique comprennent les éléments de renfort filaires métalliques et les éléments de renfort filaires textiles. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort filaires. Les éléments de renfort filaires de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'armature de frettage et la couche de travail sont avantageusement agencées directement radialement au contact l'une de l'autre.

Par directement radialement au contact, on comprend que les objets considérés directement radialement au contact l'un de l'autre, ici les couches, armatures ou la bande de roulement, ne sont séparés radialement par aucun objet, par exemple par aucune couche, armature ni bande qui serait interposé radialement entre les objets considérés directement radialement au contact l'un de l'autre.

De façon à garantir préférentiellement une triangulation efficace du sommet du pneumatique, la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche ou de l'armature axialement la moins large parmi la couche de travail et l'armature de frettage, des angles deux à deux différents en valeur absolue. On parle également de maillage triangulaire formé par les éléments de renfort filaires de frettage, de travail et de carcasse.

En d'autres termes, le ou chaque élément de renfort filaire de frettage s'étendant selon une direction principale de frettage, chaque élément de renfort filaire de travail s'étendant selon une direction principale de travail, chaque élément de renfort filaire de carcasse s'étendant selon une direction principale de carcasse, ces directions de frettage, de travail et de carcasse sont deux à deux différentes dans la portion du pneumatique délimitée axialement par les bords axiaux de la couche ou de l'armature axialement la moins large parmi la couche de travail et l'armature de frettage.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche ou de l'armature axialement la moins large parmi la couche de travail et l'armature de frettage et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, des angles deux à deux différents en valeur absolue, présente une largeur axiale égale à au moins 40%, de préférence au moins 50% de la largeur axiale de la couche de travail.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche ou de l'armature axialement la moins large parmi la couche de travail et l'armature de frettage et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du pneumatique, des angles deux à deux différents en valeur absolue, présente une largeur axiale égale à au plus 90%, de préférence au plus 80% de la largeur axiale de la couche de travail.

De préférence, le plan médian du pneumatique coupe cette portion du pneumatique comprise axialement entre les bords axiaux de la couche ou de l'armature axialement la moins large parmi la couche de travail et l'armature de frettage. Plus préférentiellement, cette portion du pneumatique comprise axialement entre les bords axiaux de la couche ou de l'armature axialement la moins large parmi la couche de travail et l'armature de frettage est centrée axialement sur le plan médian du pneumatique.

Afin d'améliorer encore davantage la triangulation du sommet du pneumatique dans le mode de réalisation dans lequel l'angle de chaque élément de renfort filaire de carcasse diffère entre le flanc et à l'aplomb radial de la couche de travail, la direction principale de chaque élément de renfort filaire de travail et la direction principale de chaque élément de renfort filaire de carcasse forment, avec la direction circonférentielle du pneumatique, dans une portion du pneumatique comprise axialement entre les bords axiaux de la couche de travail, des angles d'orientations opposées.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche de travail et dans laquelle la direction principale de chaque élément de renfort filaire de travail et la direction principale de chaque élément de renfort filaire de carcasse forment, avec la direction circonférentielle du pneumatique, des angles d'orientations opposées, présente une largeur axiale égale à au moins 40%, de préférence au moins 50% de la largeur axiale de la couche de travail.

Dans des modes de réalisation dans lesquels la direction principale de chaque élément de renfort filaire de carcasse présente, entre les portions, des zones de transition où l'angle est sensiblement variable, la portion du pneumatique comprise axialement entre les bords axiaux de la couche de travail et dans laquelle la direction principale de chaque élément de renfort filaire de travail et la direction principale de chaque élément de renfort filaire de carcasse forment, avec la direction circonférentielle du pneumatique, des angles d'orientations opposées, présente une largeur axiale égale à au plus 90%, de préférence au plus 80% de la largeur axiale de la couche de travail.

De préférence, le plan médian du pneumatique coupe cette portion du pneumatique comprise axialement entre les bords axiaux de la couche de travail. Plus préférentiellement, cette portion du pneumatique comprise axialement entre les bords axiaux de la couche de travail est centrée axialement sur le plan médian du pneumatique.

Dans un mode de réalisation permettant d'ancrer facilement l'armature de carcasse dans chaque bourrelet, chaque bourrelet comprend au moins un élément de renfort circonférentiel, la ou au moins une des couche(s) de carcasse comprenant une portion de la ou d'au moins une des couches(s) de carcasse enroulée autour de chaque élément de renfort circonférentiel, la direction principale de chaque élément de renfort filaire de carcasse forme, avec la direction circonférentielle du pneumatique, un angle de chaque élément de renfort filaire de carcasse, en valeur absolue, strictement supérieur à 0°, de préférence allant de 27° à 150° et plus préférentiellement allant de 56° à 123°, dans la portion enroulée de la ou d'au moins une des couche(s) de carcasse.

Avantageusement, les éléments de renfort filaires de chaque couche sont noyés dans une matrice élastomérique. Les différentes couches peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge. Les compositions utilisées pour ces couches sont des compositions conventionnelles pour calandrage de renforts, typiquement à base de caoutchouc naturel ou autre élastomère diénique, d'une charge renforçante telle que du noir de carbone, d'un système de vulcanisation et des additifs usuels. L'adhésion entre les éléments de renfort filaires et la matrice dans laquelle ils sont noyés est assurée par exemple par une composition adhésive usuelle, par exemple une colle du type RFL ou colle équivalente.

Avantageusement, chaque élément de renfort filaire de travail est métallique. Par élément filaire métallique, on entend par définition un élément filaire formé d'un ou d'un assemblage de plusieurs monofilaments élémentaires constitués intégralement (pour 100% des fils) d'un matériau métallique. Un tel élément filaire métallique est préférentiellement mis en oeuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) va de préférence de 0,05% à 1,2%, notamment de 0,5% à 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc. Chaque monofilament élémentaire métallique est, comme décrit ci-dessus, de préférence en acier au carbone, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée. Le ou l'assemblage de plusieurs monofilaments élémentaires peut être revêtu d'un matériau polymérique, par exemple comme cela est décrit dans US20160167438.

### PROCEDE SELON L'INVENTION

Un autre objet de l'invention est un procédé de fabrication d'un pneumatique tel que décrit ci-dessus dans lequel:
- on forme par enroulement d'une nappe de carcasse ou de plusieurs nappes de carcasse autour d'un support présentant une forme sensiblement cylindrique autour d'un axe principal, un ou plusieurs ensemble(s) de carcasse enroulé(s), le ou les ensemble(s) de carcasse enroulé(s) étant destiné(s) à former la ou les couche(s) de carcasse,
- on forme par enroulement d'une nappe de travail ou de plusieurs nappes de travail, radialement à l'extérieur du ou des ensemble(s) de carcasse enroulé(s), un ensemble de travail enroulé destiné à former la couche de travail,
   le ou les ensemble(s) de carcasse enroulé(s) et l'ensemble de travail enroulé formant un assemblage de forme sensiblement cylindrique autour de l'axe principal du support,
- on déforme l'assemblage de forme sensiblement cylindrique autour de l'axe principal du support de façon à obtenir un assemblage de forme sensiblement torique autour de l'axe principal du support,
postérieurement à l'étape de déformation, on agence, radialement autour de l'assemblage de forme sensiblement torique autour de l'axe principal du support, un ensemble de frettage enroulé destiné à former l'armature de frettage, l'ensemble de frettage enroulé étant formé par enroulement hélicoïdal du ou de chaque élément de renfort filaire de frettage ou d'une nappe de frettage obtenue par noyage du ou de chaque élément de renfort filaire de frettage dans une matrice élastomérique.

Un ensemble de carcasse peut être destiné à former une seule couche de carcasse ou bien être destiné à former deux couches de carcasse en enroulant cet ensemble de carcasse sur deux tours autour de l'ensemble d'étanchéité. Ainsi, dans un mode de réalisation dans lequel le pneumatique comprend deux couches de carcasse, on pourra former un seul ensemble de carcasse enroulé sur deux tours autour de l'ensemble d'étanchéité ou bien former un premier ensemble de carcasse radialement interne enroulé autour de l'ensemble d'étanchéité et un deuxième ensemble de carcasse radialement externe enroulé autour du premier ensemble de carcasse radialement interne, chaque premier et deuxième ensemble de carcasse formant chaque couche de carcasse.

Dans le cadre de l'invention, l'ensemble de travail est destiné à former l'unique couche de travail.

Dans un procédé simplifié dans lequel on n'a à manipuler qu'une nappe de carcasse pour former chaque ensemble de carcasse enroulé et dans lequel on éviterait des jonctions circonférentielles entre plusieurs nappes de carcasse de largeurs axiales inférieures à la largeur axiale de chaque ensemble de carcasse enroulé destiné à être formé, chaque ensemble de carcasse enroulé est constitué d'une nappe de carcasse qui est destinée à former chaque couche de carcasse. En d'autres termes, chaque nappe de carcasse est axialement continue.

Dans le cas où on forme chaque ensemble de carcasse enroulé avec plusieurs nappes de carcasse, on utilisera préférentiellement plusieurs nappes de carcasse dans lesquelles les directions principales des éléments de renfort filaires de carcasse sont toutes parallèles les unes aux autres.

De façon analogue, dans un procédé simplifié dans lequel on n'a à manipuler qu'une nappe de travail pour former l'ensemble de travail enroulé et dans lequel on éviterait des jonctions circonférentielles entre plusieurs nappes de travail de largeurs axiales inférieures à la largeur axiale de l'ensemble de travail enroulé destiné à être formé, l'ensemble de travail enroulé est constitué d'une nappe de travail qui est destinée à former l'unique couche de travail. En d'autres termes, la nappe de travail est axialement continue.

Dans le cas où on forme l'ensemble de travail enroulé avec plusieurs nappes de travail, on utilisera préférentiellement plusieurs nappes de travail dans lesquelles les directions principales des éléments de renfort filaires de travail sont toutes parallèles les unes aux autres. Bien entendu, on pourra envisager des directions principales des éléments de renfort filaires de travail non parallèles les unes aux autres d'une nappe travail à l'autre.

Lors du procédé selon l'invention, l'étape de formation de l'ensemble de frettage est réalisée de façon à ce que le ou chaque élément de renfort filaire de frettage s'étende axialement d'un bord axial à l'autre bord axial de l'ensemble de frettage selon une direction principale du ou de chaque élément de renfort filaire de frettage. L'angle formé par la direction principale du ou de chaque élément de renfort filaire de frettage avec la direction circonférentielle du support est avantageusement, en valeur absolue, inférieur ou égal à 10°, de préférence inférieur ou égal à 7° et plus préférentiellement inférieur ou égal à 5°.

Par plan médian de l'assemblage (noté m), on entend le plan perpendiculaire à l'axe principal du support qui est situé à mi-distance axiale, entre chaque bord axial de l'assemblage.

Par plan circonférentiel équatorial de l'assemblage (noté e), on entend la surface cylindrique théorique passant par l'équateur de l'assemblage, perpendiculaire au plan médian et à la direction radiale. L'équateur de l'assemblage est, dans un plan de coupe méridienne (plan perpendiculaire à la direction circonférentielle et parallèle aux directions radiale et axiales) l'axe parallèle à l'axe principal du support et situé à équidistance entre le point radialement le plus externe de l'assemblage et le point radialement le plus interne de l'assemblage, la distance entre ces deux points étant égale à h.

Le procédé comprend préférentiellement des étapes durant lesquelles :
- on moule une ébauche crue du pneumatique formée à partir de l'assemblage préalablement formé et de l'ensemble de frettage enroulé, en expansant radialement et circonférentiellement l'ébauche crue de façon à plaquer une surface radialement externe de l'ébauche crue contre une paroi de moulage d'un moule de réticulation,
- on réticule l'ébauche crue dans le moule de réticulation de façon à obtenir le pneumatique.

De façon très avantageuse, afin d'éviter que le ou chaque élément de renfort filaire de frettage ne vienne pénétrer dans l'armature de travail qui lui est radialement intérieur lors de l'étape de moulage, l'ensemble de frettage enroulé développe, sous une force égale à 2 daN/mm, un module tangent allant de 155 à 420 daN/mm.

Avant l'étape de noyage, l'élément de renfort filaire de frettage est adhérisé. Un élément de renfort filaire adhérisé est tel que le ou les matériaux textiles constituants l'élément de renfort filaire sont directement ou indirectement (dans le cas d'un élément de renfort filaire ayant été pré-adhérisé) revêtu d'une couche externe destinée à assurer l'adhésion entre l'élément de renfort filaire écru ou pré-adhérisé et la matrice. On pourra ainsi utiliser une composition adhésive aqueuse classique de type RFL (Résorcinol-Formaldéhyde-Latex d'élastomère(s)) ou bien telle que décrite dans WO2013017421 ou WO2017/168107.

Par pré-adhérisé on entend un élément de renfort filaire tel que le ou les matériaux textiles constituants l'élément de renfort filaire sont directement revêtus d'une couche intermédiaire d'une composition destinée à favoriser l'adhésion entre le ou les matériaux textiles constituants l'élément de renfort filaire et une couche externe d'une composition qui elle, est destinée à assurer l'adhésion entre l'élément filaire textile pré-adhérisé et la matrice dans laquelle sera noyé l'élément de renfort filaire une fois ce dernier adhérisé. La couche intermédiaire de composition de l'élément de renfort filaire pré-adhérisé ne peut pas assurer à elle seule, une adhésion de la même qualité que la couche externe. Une couche intermédiaire est avantageusement utilisée dans le cas de matériaux textiles relativement apolaires, par exemple dans le cas des polyamides aromatiques ou copolyamides aromatiques ou de certains polyesters.

Dans une variante, on pourra envisager le fait que, dans le cas où l'ensemble de frettage enroulé est formé par enroulement hélicoïdal de l'élément de renfort filaire de frettage, l'élément de renfort filaire de frettage est adhérisé.

Dans une autre variante, on pourra envisager le fait que, dans le cas où l'ensemble de frettage enroulé est formé par enroulement hélicoïdal de l'élément de renfort filaire de frettage, l'élément de renfort filaire de frettage est adhérisé, la couche externe de composition destinée à assurer l'adhésion étant revêtu d'une couche de composition élastomérique.

Avantageusement, afin d'améliorer le frettage du pneumatique, avant l'étape d'enroulage, l'ensemble de frettage développe, sous une force égale à 2 daN/mm, un module tangent supérieur ou égal à 210 daN/mm.

Avantageusement, afin de réduire les risques de pénétration du ou de chaque élément de renfort filaire de frettage dans l'armature de travail, avant l'étape d'enroulage, l'ensemble de frettage développe, sous une force égale à 2 daN/mm, un module tangent inférieur ou égal à 368 daN/mm.

On calcule le module tangent sous une force égale à 2 daN/mm à partir d'une courbe force-allongement obtenue en appliquant la norme ASTM D 885/D 885M - 10a de 2014 à un élément de renfort filaire de frettage de l'ensemble de frettage enroulé. On détermine également la densité axiale d'élément(s) de renfort filaire(s) de frettage par mm d'ensemble de frettage enroulé. Cette densité axiale est déterminée selon la direction axiale du support. Puis, en divisant 2 daN/mm par la densité axiale d'élément(s) de renfort filaire(s) de frettage par mm d'ensemble de frettage enroulé, on obtient la force pour l'élément de renfort filaire de frettage équivalente à la force de 2 daN/mm de l'ensemble de frettage enroulé. On déduit le module tangent M2'D de l'élément de renfort filaire de frettage, exprimé en daN/% en calculant la dérivée de la courbe au point de cette force équivalente puis on en déduit le module tangent M2D de l'ensemble de frettage enroulé, exprimé en daN/.mm.% en multipliant le module tangent M2'D par la densité axiale d'élément(s) de renfort filaire(s) de frettage par mm d'ensemble de frettage enroulé.

Tout comme dans le pneumatique, la densité axiale moyenne d'élément(s) de renfort filaire(s) de frettage est égale, dans le cas d'un unique élément de renfort filaire de frettage au nombre moyen de tours de l'élément de renfort filaire de frettage par mm d'ensemble de frettage enroulé ou, dans le cas de plusieurs élément de renfort filaire de frettage, au nombre moyen d'éléments de renfort filaires de frettage par mm d'ensemble de frettage enroulé. La détermination de la densité axiale moyenne d'élément(s) de renfort filaire(s) de frettage se fait sur une largeur axiale correspondant à 50% de la largeur axiale du pneumatique destiné à être fabriqué, cette largeur axiale étant axialement centrée sur le plan médian du support ou de l'assemblage. Ainsi, la densité axiale moyenne prend en compte les éventuelles superpositions radiales de plusieurs éléments de renfort filaires de frettage, par exemple consécutive à un tuilage ou bien consécutives à la présence de deux ensembles de frettage radialement superposés.

De façon préférentielle, préalablement à l'étape de moulage, on agence, radialement à l'extérieur de l'ensemble de frettage, une bande de matériau polymérique destiné à former la bande de roulement, de façon à former l'ébauche crue.

Dans un mode de réalisation permettant de conserver les propriétés d'un pneumatique radial conférées par les éléments de renfort filaires de carcasse radiaux dans les flancs et les propriétés d'un pneumatique comprenant une armature de sommet triangulée, le ou chaque ensemble de carcasse enroulé étant délimité axialement par deux bords axiaux du ou de chaque ensemble de carcasse enroulé et comprenant des éléments de renfort filaires de carcasse s'étendant sensiblement parallèlement les uns aux autres axialement d'un bord axial à l'autre bord axial du ou de chaque ensemble de carcasse enroulé, chaque élément de renfort filaire de carcasse s'étendant, dans le ou chaque nappe de carcasse, selon une direction principale de chaque élément de renfort filaire de carcasse dans la ou chaque nappe de carcasse, la direction principale de chaque élément de renfort filaire de carcasse formant, avec la direction circonférentielle du support, un angle initial de chaque élément de renfort filaire de carcasse, on déforme l'assemblage de forme sensiblement cylindrique de façon à obtenir l'assemblage de forme sensiblement torique de sorte que la direction principale de chaque élément de renfort filaire de carcasse forme, avec la direction circonférentielle du support:
- un angle final de chaque élément de renfort filaire de carcasse, en valeur absolue, strictement inférieur à 80°, dans une portion du ou de chaque ensemble de carcasse enroulé s'étendant axialement à l'aplomb radial de l'ensemble de travail enroulé,
- un angle final de chaque élément de renfort filaire de carcasse allant, en valeur absolue, de 80° à 90°, dans une portion du ou de chaque ensemble de carcasse enroulé destiné à s'étendre radialement dans chaque flanc.

Dans des modes de réalisation dans lesquels la direction principale de chaque élément de renfort filaire de carcasse présente, entre les portions, des zones de transition où l'angle est sensiblement variable, la portion du ou de chaque ensemble de carcasse enroulé s'étendant axialement à l'aplomb radial de l'ensemble de travail enroulé et dans laquelle la direction principale de chaque élément de renfort filaire de carcasse forme, avec la direction circonférentielle du support un angle final, en valeur absolue, strictement inférieur à 80°, présente une largeur axiale égale à au moins 40%, de préférence au moins 50% de la largeur axiale de l'ensemble de travail enroulé.

Dans des modes de réalisation dans lesquels la direction principale de chaque élément de renfort filaire de carcasse présente, entre les portions, des zones de transition où l'angle est sensiblement variable, la portion du ou de chaque ensemble de carcasse enroulé s'étendant axialement à l'aplomb radial de l'ensemble de travail enroulé et dans laquelle la direction principale de chaque élément de renfort filaire de carcasse forme, avec la direction circonférentielle du support un angle final, en valeur absolue, strictement inférieur à 80°, présente une largeur axiale égale à au plus 90%, de préférence au plus 80% de la largeur axiale de l'ensemble de travail enroulé.

De préférence, le plan médian de l'assemblage coupe cette portion du ou de chaque ensemble de carcasse enroulé s'étendant axialement à l'aplomb radial de l'ensemble de travail enroulé. Plus préférentiellement, cette portion du ou de chaque ensemble de carcasse enroulé s'étendant axialement à l'aplomb radial de l'ensemble de travail enroulé est centrée axialement sur le plan médian de l'assemblage.

La largeur axiale de la portion du ou de chaque ensemble de carcasse enroulé dépend notamment du taux de déformation ainsi que des angles initiaux. L'homme du métier saura en faisant varier l'un et ou l'autre de ces paramètres, faire varier la largeur axiale de la portion du ou de chaque ensemble de carcasse enroulé concernée.

Dans des modes de réalisation dans lesquels la direction principale de chaque élément de renfort filaire de carcasse présente, entre les portions, des zones de transition où l'angle est sensiblement variable, chaque portion du ou de chaque ensemble de carcasse enroulé destinée à s'étendre radialement dans chaque flanc et dans laquelle la direction principale de chaque élément de renfort filaire de carcasse forme, avec la direction circonférentielle du support un angle final allant, en valeur absolue, de 80° à 90°, présente une hauteur radiale égale à au moins 5%, de préférence au moins 15% et encore plus préférentiellement au moins 30% de la hauteur radiale du pneumatique fabriqué.

Dans des modes de réalisation dans lesquels la direction principale de chaque élément de renfort filaire de carcasse présente, entre les portions, des zones de transition où l'angle est sensiblement variable, chaque portion du ou de chaque ensemble de carcasse enroulé destinée à s'étendre radialement dans chaque flanc et dans laquelle la direction principale de chaque élément de renfort filaire de carcasse forme, avec la direction circonférentielle du support un angle final allant, en valeur absolue, de 80° à 90°, présente une hauteur radiale égale à au plus 80%, de préférence au plus 70% et encore plus préférentiellement au plus 60% de la hauteur radiale du pneumatique fabriqué.

De préférence, le plan circonférentiel équatorial de l'assemblage coupe chaque portion du ou de chaque ensemble de carcasse enroulé destinée à être située dans chaque flanc.

De façon analogue, la hauteur radiale de la portion du ou de chaque ensemble de carcasse enroulé dépend notamment du taux de déformation ainsi que des angles initiaux. L'homme du métier saura en faisant varier l'un et ou l'autre de ces paramètres, faire varier hauteur radiale de chaque portion du ou de chaque ensemble de carcasse enroulé concernée.

Afin d'obtenir, à l'issue de l'étape de déformation des angles finaux permettant un compromis préférentiel de performances du pneumatique, l'angle initial formé par la direction principale de chaque élément de renfort filaire de carcasse avec la direction circonférentielle du support est, en valeur absolue, strictement supérieur à 0°, de préférence va de 27° à 150° et plus préférentiellement va de 56° à 123°.

Un tel compromis préférentiel de performances du pneumatique est obtenu lorsqu'on a l'angle final formé par la direction principale de chaque élément de renfort filaire de carcasse avec la direction circonférentielle du support étant, en valeur absolue, supérieur ou égal à 10°, de préférence va de 20° à 75° et plus préférentiellement va de 35 à 70°, dans la portion du ou de chaque ensemble de carcasse enroulé s'étendant axialement à l'aplomb radial de l'ensemble de travail enroulé.

Dans un mode de réalisation permettant de conserver les propriétés d'un pneumatique comprenant une armature de sommet triangulée, l'ensemble de travail enroulé étant délimité axialement par deux bords axiaux de l'ensemble de travail enroulé et comprenant des éléments de renfort filaires de travail s'étendant sensiblement parallèlement les uns aux autres axialement d'un bord axial à l'autre bord axial de l'ensemble de travail enroulé, chaque élément de renfort filaire de travail s'étendant, dans la ou chaque nappe de travail, selon une direction principale de chaque élément de renfort filaire de travail dans la ou chaque nappe de travail, la direction principale de chaque élément de renfort filaire de travail dans la ou chaque nappe de travail formant, avec la direction circonférentielle du support, un angle initial de chaque élément de renfort filaire de travail, on déforme l'assemblage de forme sensiblement cylindrique autour de l'axe principal du support de façon à obtenir l'assemblage de forme sensiblement torique autour de l'axe principal du support, de sorte que la direction principale de chaque élément de renfort filaire de travail forme, avec la direction circonférentielle du support, un angle final de chaque élément de renfort filaire de travail, en valeur absolue, strictement supérieur à 10°.

Afin d'obtenir, à l'issue de l'étape de déformation des angles finaux permettant un compromis préférentiel de performances du pneumatique, l'angle initial formé par la direction principale de chaque élément de renfort filaire de travail avec la direction circonférentielle du support est, en valeur absolue, strictement supérieur à 0°, de préférence va de 4° à 60° et plus préférentiellement va de 16° à 47°.

Un tel compromis préférentiel de performances du pneumatique est obtenu lorsqu'on a l'angle final formé par la direction principale de chaque élément de renfort filaire de travail avec la direction circonférentielle du support allant, en valeur absolue, de 15° à 50°, de préférence de 18° à 30°.

Dans certains modes de réalisation, l'angle final formé par la direction principale de chaque élément de renfort filaire de travail avec la direction circonférentielle du support est sensiblement égal à l'angle formé par la direction principale de chaque élément de renfort filaire de travail de la couche de travail avec la direction circonférentielle du pneumatique une fois ce dernier fabriqué. De façon analogue, dans ces mêmes modes de réalisation, l'angle final formé par la direction principale de chaque élément de renfort filaire de carcasse avec la direction circonférentielle du support dans la portion de l'ensemble de carcasse enroulé s'étendant axialement à l'aplomb radial de l'ensemble de travail enroulé est sensiblement égal à l'angle formé par la direction principale de chaque élément de renfort filaire de carcasse de la ou des couche(s) de carcasse avec la direction circonférentielle du pneumatique dans la portion de la ou des couche(s) de carcasse s'étendant axialement à l'aplomb radial de la couche de travail une fois le pneumatique fabriqué.

Dans d'autres modes de réalisation, une légère diminution des angles finaux peut intervenir lors de l'étape de moulage de l'ébauche crue dans le moule durant laquelle l'ébauche crue est plaquée contre des surfaces de moulage du moule et subit une déformation radiale de moulage non négligeable par rapport à la déformation subie lors de l'étape de déformation pour faire passer l'assemblage de l'ensemble de carcasse enroulé et de l'ensemble de travail enroulé de la forme sensiblement cylindrique à la forme sensiblement torique.

Dans des modes de réalisation préférés permettant d'obtenir une triangulation efficace, la direction principale du ou de chaque élément de renfort filaire de frettage, la direction principale de chaque élément de renfort filaire de travail et la direction principale de chaque élément de renfort filaire de carcasse forment, avec la direction circonférentielle du support, dans une portion de l'assemblage et de l'ensemble de frettage enroulé comprise axialement entre les bords axiaux de l'ensemble enroulé axialement le moins large parmi l'ensemble de travail enroulé et l'ensemble de frettage enroulé, des angles deux à deux différents en valeur absolue.

La portion de l'assemblage et de l'ensemble de frettage enroulé comprise axialement entre les bords axiaux de l'ensemble enroulé axialement le moins large parmi l'ensemble de travail enroulé et l'ensemble de frettage enroulé et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du support, des angles deux à deux différents en valeur absolue, présente une largeur axiale égale à au moins 40%, de préférence au moins 50% de la largeur axiale de l'ensemble de travail enroulé.

La portion de l'assemblage et de l'ensemble de frettage enroulé comprise axialement entre les bords axiaux de l'ensemble enroulé axialement le moins large parmi l'ensemble de travail enroulé et l'ensemble de frettage enroulé et dans laquelle la direction principale du ou de chaque élément de renfort filaire de frettage, la direction principale de chaque élément de renfort filaire de travail et la direction principale de chaque élément de renfort filaire de carcasse forment, avec la direction circonférentielle du support, des angles deux à deux différents en valeur absolue, présente une largeur axiale égale à au plus 90%, de préférence au plus 80% de la largeur axiale de l'ensemble de travail enroulé.

De préférence, le plan médian de l'assemblage coupe cette portion de l'assemblage et de l'ensemble de frettage enroulé comprise axialement entre les bords axiaux de l'ensemble enroulé axialement le moins large parmi l'ensemble de travail enroulé et l'ensemble de frettage enroulé. Plus préférentiellement, cette portion de l'assemblage et de l'ensemble de frettage enroulé comprise axialement entre les bords axiaux de l'ensemble enroulé axialement le moins large parmi l'ensemble de travail enroulé et l'ensemble de frettage enroulé est centrée axialement sur le plan médian de l'assemblage.

Dans le procédé décrit ci-dessus, les angles initiaux formés avec la direction circonférentielle du support par les directions principales des éléments de renfort filaires de carcasse et de travail varient lors de l'étape de déformation pour atteindre leurs angles finaux, à l'exception de la portion enroulée de l'ensemble de carcasse enroulé autour des éléments de renfort circonférentiels dans laquelle la direction principale des éléments de renfort filaires de carcasse reste sensiblement identique par rapport à la direction circonférentielle du support et donc du pneumatique.

La variation de l'angle de la direction principale des éléments de renfort filaires de carcasse et de travail est déterminable par l'homme du métier en fonction du taux de déformation utilisé lors du procédé. Le taux de déformation est déterminé de façon connue par l'homme du métier en fonction du rapprochement axial des bords axiaux du ou des ensemble(s) de carcasse enroulé(s) et de l'agrandissement radial de l'assemblage entre sa forme cylindrique et sa forme torique. La détermination des angles initiaux en fonction des angles finaux dépend, de façon connue de l'homme du métier, du taux de déformation comme cela est expliqué dans FR2797213 et dans FR1413102.

Dans un mode de réalisation permettant d'ancrer facilement l'armature de carcasse dans chaque bourrelet, postérieurement à l'étape de formation du ou d'au moins un des ensemble(s) de carcasse enroulé(s) :
- on agence deux éléments de renfort circonférentiels autour du ou d'au moins un des ensemble(s) de carcasse enroulé(s),
- on retourne axialement vers l'intérieur chaque bord axial du ou d'au moins un des ensemble(s) de carcasse enroulé(s) de façon à recouvrir radialement chaque élément de renfort circonférentiel par un des bords axiaux du ou d'au moins un des ensemble(s) de carcasse enroulé(s) et à former une portion du ou d'au moins un des ensemble(s) de carcasse enroulé(s) enroulée autour de chaque élément de renfort circonférentiel,
- on déforme l'assemblage de forme sensiblement cylindrique de façon à obtenir l'assemblage de forme sensiblement torique de sorte que la direction principale de chaque élément de renfort filaire de carcasse forme, avec la direction circonférentielle du support, un angle final de chaque élément de renfort filaire de carcasse, en valeur absolue, strictement inférieur à 80° dans la portion enroulée du ou d'au moins un des ensemble(s) de carcasse enroulé(s).

Dans le mode de réalisation décrit ci-dessus, l'angle final formé par la direction principale de chaque élément de renfort filaire de carcasse, avec la direction circonférentielle du support, dans la portion enroulée du ou d'au moins un des ensemble(s) de carcasse enroulé(s), est sensiblement identique à l'angle initial formé par la direction principale de chaque élément de renfort filaire de carcasse avant l'étape de déformation du fait de l'ancrage de cette portion autour de l'élément de renfort circonférentiel.

### DESCRIPTION DES EXEMPLES

L'invention ainsi que ses avantages seront aisément compris à la lumière de la description détaillée et des exemples de réalisation non limitatifs qui suivent, ainsi que des figures 1 à 20 relatives à ces exemples dans lesquels :
- la figure 1 est une vue en coupe dans un plan de coupe méridien d'un pneumatique selon l'invention;
- la figure 2 est une vue schématique en arraché du pneumatique de la figure 1 illustrant l'agencement des éléments de renfort filaires à l'aplomb radial et en surplomb radial de la couche de travail;
- la figure 3 est une vue schématique des éléments de renfort filaires de carcasse agencés dans le flanc du pneumatique de la figure 1;
- la figure 4 est une vue dans un plan de coupe perpendiculaire à la direction axiale d'une portion du sommet du pneumatique de la figure 1;
- la figure 5 est une vue dans un plan de coupe perpendiculaire à la direction principale selon laquelle s'étend chaque élément de renfort filaire de frettage du pneumatique de la figure 1 ;
- la figure 6 est une courbe force-allongement d'un élément de renfort filaire de frettage du pneumatique de la figure 1;
- les figures 7 à 16 illustrent les différentes étapes du procédé selon l'invention permettant de fabriquer le pneumatique de la figure 1;
- les figures 17 et 18 illustrent, pour différents modèles, le coefficient de corrélation R2 entre la résistance au roulement simulée et le module tangent de l'armature de frettage pour un pneumatique selon l'invention respectivement à effort imposé et à allongement imposé, et
- les figures 19 et 20 illustrent, pour différents modèles, le coefficient de corrélation R2 entre la résistance au roulement simulée et le module tangent de l'armature de frettage pour un pneumatique classique respectivement à effort imposé et à allongement imposé.

Dans les figures relatives au pneumatique, on a représenté un repère X, Y, Z correspondant aux directions habituelles respectivement axiale (X), radiale (Y) et circonférentielle (Z) d'un pneumatique. Dans les figures relatives au procédé, on a représenté un repère x, y, z correspondant aux directions habituelles respectivement axiale (x), radiale (y) et circonférentielle (z) d'un support de fabrication déformable entre une forme sensiblement cylindrique et une forme torique autour de l'axe x.

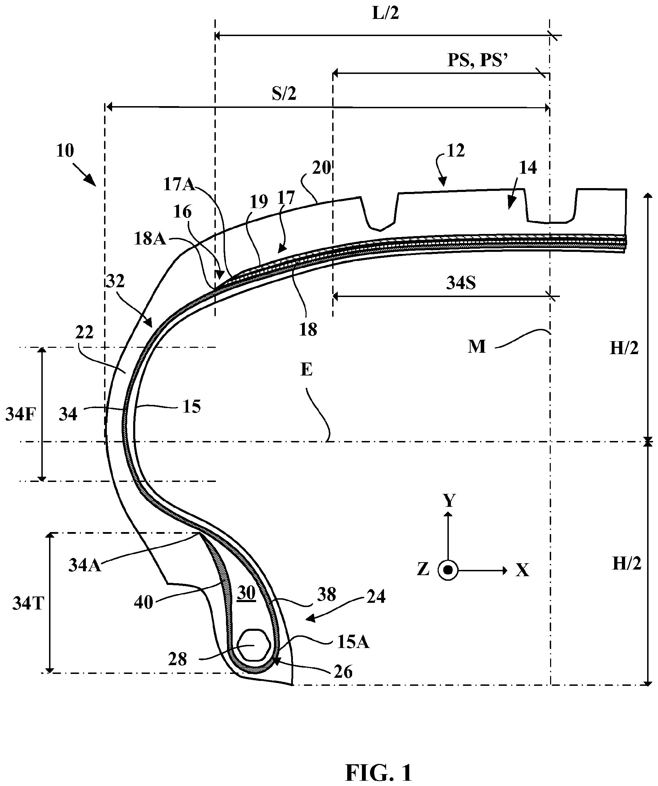

On a représenté sur la figure 1 un pneumatique, conforme à l'invention et désigné par la référence générale 10. Le pneumatique 10 est sensiblement de révolution autour d'un axe sensiblement parallèle à la direction axiale X. Le pneumatique 10 est ici destiné à un véhicule de tourisme et présente des dimensions 245/45R18.

Le pneumatique 10 comprend un sommet 12 comprenant une bande de roulement 20 destinée à venir en contact avec un sol lors du roulage et une armature de sommet 14 s'étendant dans le sommet 12 selon la direction circonférentielle Z. Le pneumatique 10 comprend également une couche d'étanchéité 15 à un gaz de gonflage étant destiné à délimiter une cavité interne fermée avec un support de montage du pneumatique 10 une fois le pneumatique 10 monté sur le support de montage, par exemple une jante. La couche d'étanchéité 15 comprend une composition élastomérique comprenant une matrice élastomérique comprenant au moins 50 pce d'un ou de plusieurs élastomères butyles.

L'armature de sommet 14 comprend une armature de travail 16 comprenant une couche de travail 18 et une armature de frettage 17 comprenant une unique couche de frettage 19. Ici, l'armature de travail 16 comprend une unique couche de travail 18 et est, en l'espèce, constituée de l'unique couche de travail 18. Dans la description qui suit, on parlera, par soucis de simplification de la couche de travail 18 sans rappeler à chaque fois que cette couche est unique. L'armature de frettage 17 est constituée de la couche de frettage 19.

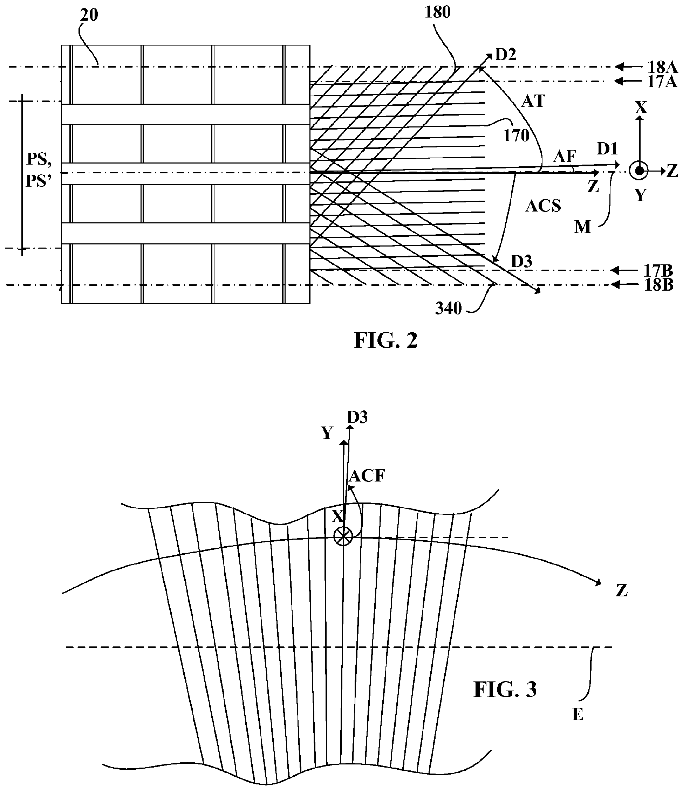

L'armature de sommet 14 est surmontée radialement de la bande de roulement 20. Ici, l'armature de frettage 17, ici la couche de frettage 19, est agencée radialement à l'extérieur de l'armature de travail 16 et est donc radialement intercalée entre l'armature de travail 16 et la bande de roulement 20. Dans le mode de réalisation illustré à la figure 2, l'armature de frettage 17 présente une largeur axiale plus petite que la largeur axiale de la couche de travail 18. Ainsi, l'armature de frettage 17 est axialement la moins large de la couche de travail 18 et de l'armature de frettage 17.

Le pneumatique 10 comprend deux flancs 22 prolongeant le sommet 12 radialement vers l'intérieur. Le pneumatique 10 comporte en outre deux bourrelets 24 radialement intérieurs aux flancs 22. Chaque flanc 22 relie chaque bourrelet 24 au sommet 12.

Chaque bourrelet 24 comprend au moins un élément de renfort circonférentiel 26, en l'occurrence une tringle 28 surmontée radialement d'une masse de gomme 30 de bourrage.

Le pneumatique 10 comprend une armature 32 de carcasse ancrée dans chaque bourrelet 24. L'armature 32 de carcasse s'étend dans chaque flanc 22 et radialement intérieurement au sommet 12. L'armature de sommet 14 est agencée radialement entre la bande de roulement 20 et l'armature de carcasse 32.

L'armature de carcasse 32 comprend une couche de carcasse 34. Ici, l'armature de carcasse 32 comprend une unique couche de carcasse 34, et en l'espèce est constituée de l'unique couche de carcasse 34. Dans ce mode de réalisation, on parlera, par soucis de simplification de la couche de carcasse 34 sans rappeler à chaque fois que cette couche est unique.

La couche de carcasse 34 comprend une portion 34T de la couche de carcasse 34 enroulée autour de chaque élément de renfort circonférentiel 26 de manière à former dans chaque bourrelet 24 une portion 38 axialement intérieure et une portion axialement extérieure 40. La masse de gomme 30 de bourrage est intercalée entre les portions 38, 40 axialement intérieure et extérieure. D'autres modes d'ancrage de la couche de carcasse 34 sont possibles, par exemple comme décrit dans US5702548.

Chaque couche de travail 18, de frettage 19 et de carcasse 34 comprend une matrice élastomérique dans laquelle sont noyés un ou des éléments de renfort filaires de la couche correspondante. On va maintenant décrire ces couches en référence aux figures 1 à 4.

L'armature de frettage 17, ici la couche de frettage 19, est délimitée axialement par deux bords axiaux 17A, 17B de l'armature de frettage 17. L'armature de frettage 17 comprend plusieurs éléments de renfort filaires de frettage 170 enroulés circonférentiellement hélicoïdalement de façon à s'étendre axialement du bord axial 17A à l'autre bord axial 17B de l'armature de frettage 17 selon une direction principale D1 de chaque élément de renfort filaire de frettage 170. La direction principale D1 forme, avec la direction circonférentielle Z du pneumatique 10, un angle AF, en valeur absolue, inférieur ou égal à 10°, de préférence inférieur ou égal à 7° et plus préférentiellement inférieur ou égal à 5°. Ici, AF=-5°. L'armature de frettage présente une densité axiale moyenne de 69 fils par décimètre, soit 0,69 fils par mm.

La couche de travail 18 est délimitée axialement par deux bords axiaux 18A, 18B de la couche de travail 18. La couche de travail 18 comprend des éléments de renfort filaires de travail 180 s'étendant axialement du bord axial 18A à l'autre bord axial 18B de la couche de travail 18 les uns sensiblement parallèlement aux autres. Chaque élément de renfort filaire de travail 180 s'étend selon une direction principale D2 de chaque élément de renfort filaire de travail 180. La direction D2 forme, avec la direction circonférentielle Z du pneumatique 10, un angle AT, en valeur absolue, strictement supérieur à 10°, de préférence allant de 15° à 50° et plus préférentiellement allant de 18° à 30°. Ici, AT=24°.

La couche de carcasse 34 est délimitée axialement par deux bords axiaux 34A, 34B de la couche de carcasse 34. La couche de carcasse 34 comprend des éléments de renfort filaires de carcasse 340 s'étendant axialement du bord axial 34A à l'autre bord axial 34B de la couche de carcasse 34.

Chaque élément de renfort filaire de carcasse 340 s'étend selon une direction principale D3 de chaque élément de renfort filaire de carcasse 340 formant, avec la direction circonférentielle Z du pneumatique 10 un angle ACS, en valeur absolue, strictement inférieur à 80° dans une portion 34S de la couche de carcasse 34 s'étendant axialement à l'aplomb radial de la couche de travail 18. Avantageusement, dans cette portion 34S de la couche de carcasse 34 s'étendant axialement à l'aplomb radial de la couche de travail 18, la direction principale D3 de chaque élément de renfort filaire de carcasse 340 forme, avec la direction circonférentielle Z du pneumatique 10, un angle ACS, en valeur absolue, supérieur ou égal à 10°, de préférence allant de 20° à 75° et plus préférentiellement allant de 35° à 70°. Ici, ACS=43°.

La portion 34S de la couche de carcasse 34 s'étendant axialement à l'aplomb de la couche de travail 18 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la couche de travail 18. Le plan médian M du pneumatique 10 coupe cette portion 34S. Plus préférentiellement, cette portion 34S est centrée axialement sur le plan médian M du pneumatique 10.

Comme illustré sur les figures 1 et 3, la direction principale D3 de chaque élément de renfort filaire de carcasse 340 forme, avec la direction circonférentielle Z du pneumatique 10, un angle ACF, en valeur absolue, allant de 80° à 90° dans au moins une portion 34F de la couche de carcasse 34 s'étendant radialement dans chaque flanc 22. Ici, ACF=90°.

Chaque portion 34F de la couche de carcasse 34 s'étendant radialement dans chaque flanc 22 présente une hauteur radiale égale à au moins 5%, de préférence au moins 15% et plus préférentiellement au moins 30% de la hauteur radiale H du pneumatique 10 et égale à au plus 80%, de préférence au plus 70% et plus préférentiellement au plus 60% de la hauteur radiale H du pneumatique 10 et en l'espèce égale à 41% de la hauteur radiale H du pneumatique 10. Le plan circonférentiel équatorial E du pneumatique 10 coupe chaque portion 34F de la couche de carcasse 34 située dans chaque flanc 22.

La direction principale D3 de chaque élément de renfort filaire de carcasse 340 forme, avec la direction circonférentielle Z du pneumatique 10, un angle ACT, en valeur absolue, strictement supérieur à 0°, de préférence allant de 27° à 150° et plus préférentiellement allant de 56° à 123°, dans la portion enroulée 34T de la couche de carcasse 34.

Comme illustré sur la figure 2, la direction principale D1 de chaque élément de renfort filaire de frettage 170, la direction principale D2 de chaque élément de renfort filaire de travail 180 et la direction principale D3 de chaque élément de renfort filaire de carcasse 340 forment, avec la direction circonférentielle Z du pneumatique 10, dans une portion PS' du pneumatique 10 comprise axialement entre les bords axiaux 17A, 17B de l'armature de frettage 17, des angles deux à deux différents en valeur absolue. En outre, la direction principale D2 de chaque élément de renfort filaire de travail 180 et la direction principale D3 de chaque élément de renfort filaire de carcasse 340 forment, avec la direction circonférentielle Z du pneumatique 10, dans une portion PS du pneumatique 10 comprise axialement entre les bords axiaux 18A, 18B de la couche de travail 18, des angles AT et ACS d'orientations opposées. En l'espèce, AT=-24° et ACS=+43°.

Dans le mode de réalisation décrit, chaque portion PS, PS' du pneumatique 10 présente une largeur axiale égale à au moins 40%, de préférence au moins 50% de la largeur axiale L de la couche de travail 18 et égale à au plus 90%, de préférence au plus 80% de la largeur axiale L de la couche de travail 18 et en l'espèce égale à 60% de la largeur axiale L de la couche de travail 18. Le plan médian M du pneumatique 10 coupe chaque portion PS, PS' du pneumatique 10. Plus préférentiellement, chaque portion PS, PS' du pneumatique 10 est centrée axialement sur le plan médian M du pneumatique 10.

Chaque élément de renfort filaire de travail 180 est un assemblage de deux monofilaments en acier présentant chacun un diamètre égal à 0,30 mm, les deux monofilaments en acier étant enroulés l'un avec l'autre au pas de 14 mm.

Chaque élément de renfort filaire de carcasse 340 comprend classiquement deux brins multifilamentaires, chaque brin multifilamentaire étant constitué d'un filé de monofilaments de polyesters, ici de PET, ces deux brins multifilamentaires étant surtordus individuellement à 240 tours par mètre dans un sens puis retordus ensemble à 240 tours par mètre dans le sens opposé. Ces deux brins multifilamentaires sont enroulés en hélice l'un autour de l'autre. Chacun de ces brins multifilamentaires présente un titre égal à 220 tex.

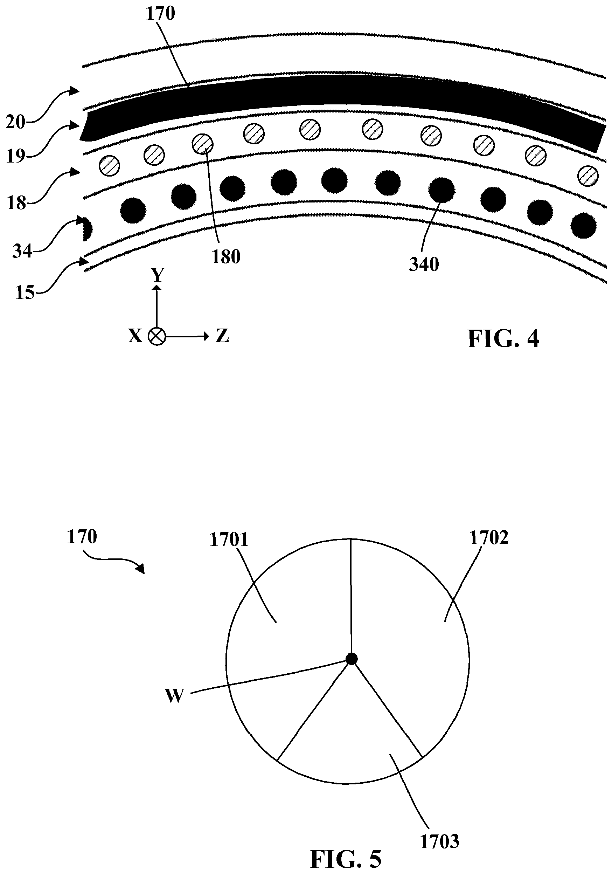

Comme illustré sur la figure 5, chaque élément de renfort filaire de frettage 170 est constitué de trois brins multifilamentaires 1701, 1702, 1703, et en l'espèce, constitué de deux brins multifilamentaires 1701, 1702 de polyamide aromatique ou copolyamide aromatique et d'un brin multifilamentaire 1703 de polyamide aliphatique ou de polyester, et ici constitué de deux brins multifilamentaires 1701, 1702 de polyamide aromatique, par exemple en Kevlar de la société Dupont Maydown et d'un brin multifilamentaire 1703 de polyamide aliphatique, par exemple en Nylon T728 de la société Kordsa. Chaque brin multifilamentaire 1701, 1702, 1703 est enroulé en hélice autour d'un axe principal commun W aux trois brins multifilamentaires.

Le titre de chaque brin multifilamentaire de polyamide aromatique 1701, 1702 va de 150 tex à 350 tex et en l'espèce est égal à 330 tex. Le titre du brin multifilamentaire de polyamide aliphatique 1703 va de 120 tex à 250 tex et en l'espèce est égal à 188 tex. Le rapport du titre total, exprimé en tex, de polyamide aromatique sur le titre total, exprimé en tex, de chaque élément de renfort filaire de frettage 170 va de 0,60 à 0,90, de préférence de 0,65 à 0,80 et est ici égal à 0,78.

Chaque élément de renfort filaire de frettage 170 est équilibré en torsion et est obtenu par un procédé comprenant une première étape de torsion de chaque brin multifilamentaire 1701, 1702, 1703 selon un nombre de tours par mètre N1 dans un premier sens de torsion. Le procédé comprend une deuxième étape d'assemblage par torsion des trois brins multifilamentaires 1701, 1702, 1703 selon un nombre de tours par mètre N2 dans un deuxième sens de torsion opposé au premier sens de torsion autour de l'axe principal commun W, avec ici N1=N2. La torsion d'assemblage N2 des trois brins multifilamentaires 1701, 1702, 1703 autour de l'axe principal commun W va de 150 tours par mètre à 400 tours par mètre et en l'espèce N2=270 tours par mètre.

Le coefficient de torsion K de chaque élément de renfort filaire de frettage 170 décrit précédemment va de 140 à 260, de préférence de 180 à 220 et encore plus préférentiellement de 205 à 220 et ici égale à 212 avec une densité moyenne du matériau constitutif de chaque élément de renfort filaire de frettage 170 égale à 1,37 en prenant une densité de polyamide aromatique égale à 1,44 et une densité de polyamide aliphatique égale à 1,14.

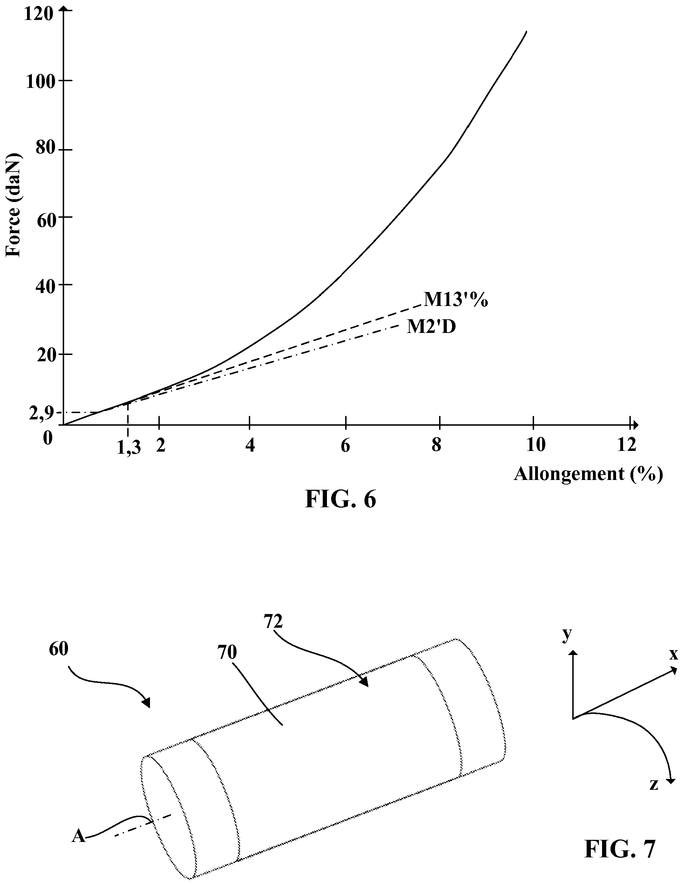

L'armature de frettage 17 présente également un module tangent M13% à 1,3% d'allongement allant de 200 à 650 daN/mm. Le module tangent M13% est déterminé à partir du module tangent M13'% à 1,3% d'allongement de chaque élément de renfort filaire de frettage 170, illustré sur la figure 6 que l'on a multiplié par la densité axiale moyenne d'éléments de renfort filaires de frettage 170 par mm d'armature de frettage, et ici par le nombre de tours moyen des éléments de renfort filaire de frettage par mm d'armature de frettage 17. Ici M13'%=4,67 daN/% et N=0,69 tours par mm. Plus précisément, le module tangent M13% est supérieur ou égal à 220 daN/mm et inférieur ou égal à 600 daN/mm, de préférence inférieur ou égal à 500 daN/mm et ici égal à 322 daN/mm.

L'armature de frettage 14 développe, sous une force égale à 2 daN/mm, un module tangent M2D allant de 150 à 400 daN/mm. Plus précisément, l'armature de frettage 14 développe, sous une force égale à 2 daN/mm, un module tangent M2D supérieur ou égal à 200 daN/mm et inférieur ou égal à 350 daN/mm. Dans l'exemple illustré, compte tenu de la densité axiale moyenne d'éléments de renfort filaires de frettage 170 égale à 0,69 éléments par mm, la force égale à 2 daN/mm représente une force équivalente à 2,9 daN/élément de renfort filaire de frettage, ce qui, sur la figure 6 donne un module tangent équivalent M2'D égal à 4,35 daN/%, soit un module M2D égal à 300 daN/mm pour l'armature de frettage 14.

Le pneumatique 10 est obtenu par un procédé selon l'invention que l'on va décrire en référence aux figures 7 à 13.

Tout d'abord, on fabrique un ensemble de travail enroulé 50 et un ensemble de carcasse enroulé 52 en agençant parallèlement les uns aux autres les éléments de renfort filaires 180 et 340 de chaque ensemble 50 et 52 et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments de renfort filaires sont parallèles les uns aux autres et sont parallèles à la direction principale de la nappe. Puis, on découpe des portions de chaque nappe droite selon un angle de découpe et on aboute ces portions les unes aux autres de façon à obtenir une nappe dite à angle, dans laquelle les éléments de renfort filaires de la nappe sont parallèles les uns aux autres et forment un angle avec la direction principale de la nappe égal à l'angle de découpe.

Dans le mode de réalisation décrit, on obtient d'une part une unique nappe de travail 49 et une unique nappe de carcasse 51 dont la largeur axiale de chacune, c'est-à-dire la dimension selon une direction perpendiculaire aux bords longitudinaux de chaque nappe, est égale à la largeur axiale respectivement de chaque ensemble de travail enroulé 50 et de carcasse 52 qui seront formés ultérieurement.

En référence à la figure 7, dans une première étape d'assemblage d'une ébauche crue, on forme par enroulement d'une nappe d'étanchéité 70 autour d'un support 60 présentant une forme sensiblement cylindrique autour de son axe principal A, un ensemble d'étanchéité enroulé 72 destiné à former la couche d'étanchéité 15. Le support 60 présente une surface de pose sensiblement cylindrique de rayon égal à 235 mm.

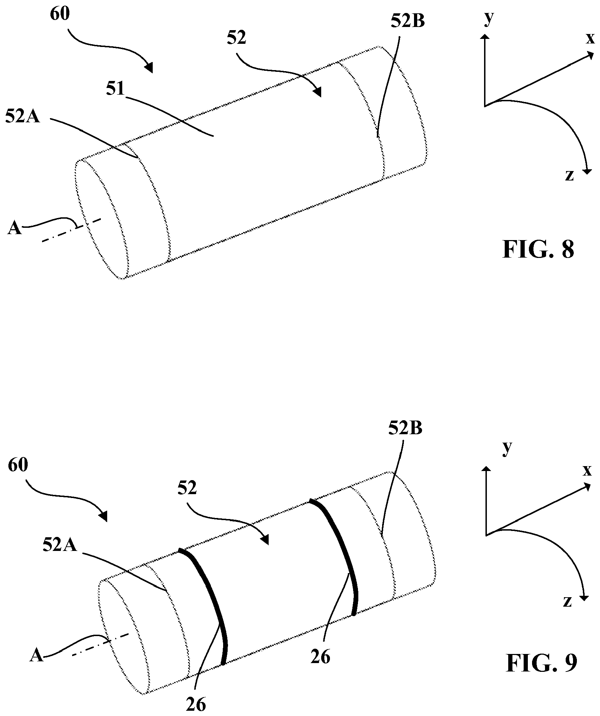

Puis, en référence à la figure 8, radialement à l'extérieur de l'ensemble d'étanchéité enroulé 72, on forme par enroulement de la nappe de carcasse 51 autour du support 60, l'ensemble de carcasse enroulé 52 destiné à former la couche de carcasse 34. L'ensemble de carcasse enroulé 52 est délimité axialement par deux bords axiaux 52A, 52B de l'ensemble de carcasse 52 et comprend les éléments de renfort filaires de carcasse 340 s'étendant sensiblement parallèlement les uns aux autres axialement du bord axial 52A à l'autre bord axial 52B de l'ensemble de carcasse 52 enroulé. Chaque élément de renfort filaire de carcasse 340 s'étend, dans la nappe de carcasse 51, selon une direction principale K3 de chaque élément de renfort filaire de carcasse 340 dans la nappe de carcasse 51. La direction principale K3 forme, avec la direction circonférentielle z du support 60, un angle initial A3 de chaque élément de renfort filaire de carcasse 340, en valeur absolue, strictement supérieur à 0°, de préférence allant de 27° à 150° et plus préférentiellement allant de 56° à 123°. Ici A3=75°.

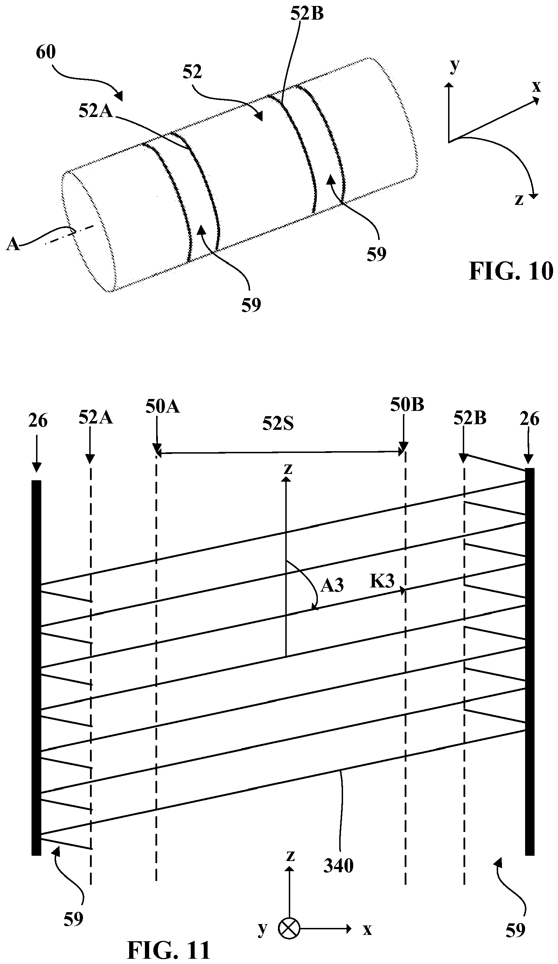

En référence aux figures 9 et 10, ensuite, on agence les deux éléments de renfort circonférentiels 26 autour de l'ensemble de carcasse enroulé 52 et on retourne axialement vers l'intérieur chaque bord axial 52A, 52B de l'ensemble de carcasse enroulé 52 de façon à recouvrir radialement chaque élément de renfort circonférentiel 26 par chaque bord axial 52A, 52B de l'ensemble de carcasse enroulé 52 et à former une portion 59 de l'ensemble de carcasse enroulé 52 enroulée autour de chaque élément de renfort circonférentiel 26. La portion 59 de l'ensemble de carcasse enroulé 52 est destinée à former la portion 34T de la couche de carcasse 34 enroulée autour de chaque élément de renfort circonférentiel 26 dans le pneumatique.

On a représenté sur la figure 11 un schéma illustrant l'agencement des éléments de renfort filaires 340 de carcasse à l'issue de l'étape de retournement axial des bords axiaux 52A, 52B de l'ensemble de carcasse enroulé 52 autour des éléments de renfort circonférentiel 26. Sur cette figure 11, on a représenté l'angle initial A3 décrit ci-dessus ainsi que chaque portion 59.

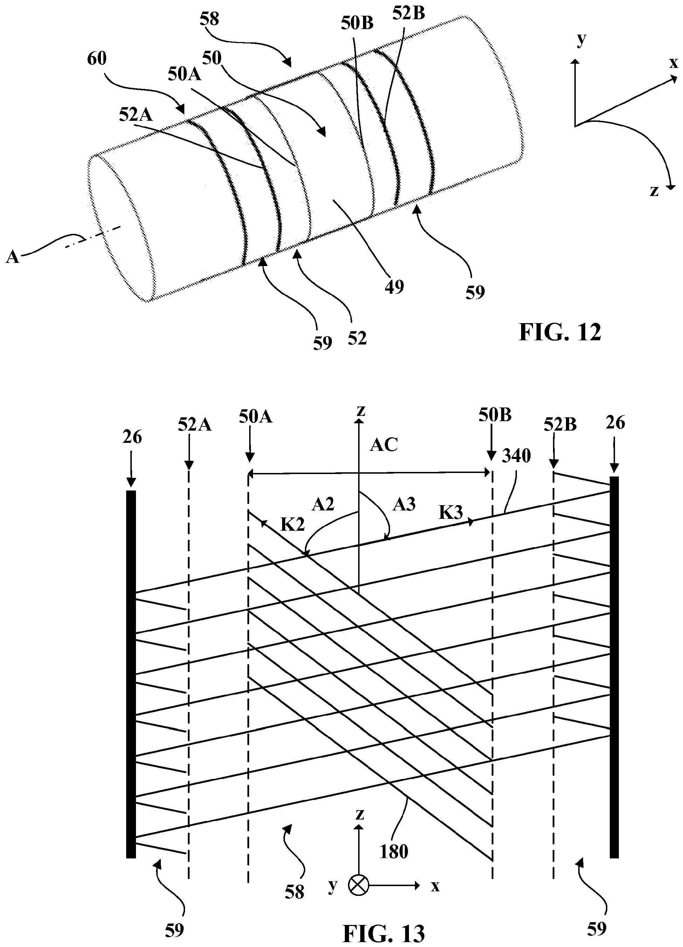

Puis, en référence à la figure 12, on forme par enroulement de la nappe de travail 49, radialement à l'extérieur de l'ensemble de carcasse enroulé 52, l'ensemble de travail enroulé 50 destiné à former la couche de travail 18. L'ensemble de travail enroulé 50 est délimité axialement par deux bords axiaux 50A, 50B de l'ensemble de travail enroulé 50 et comprend les éléments de renfort filaires de travail 180 s'étendant sensiblement parallèlement les uns aux autres axialement du bord axial 50A à l'autre bord axial 50B de l'ensemble de travail enroulé 50. Chaque élément de renfort filaire de travail 180 s'étend, dans la nappe de travail 49, selon une direction principale K2 de chaque élément de renfort filaire de travail 180 dans la nappe de travail 49. En référence à la figure 13, la direction principale K2 forme, avec la direction circonférentielle z du support 60, un angle initial A2 de chaque élément de renfort filaire de travail 180, en valeur absolue, strictement supérieur à 0°, de préférence allant de 4° à 60° et plus préférentiellement allant de 16° à 47°. Ici, A2=35°.

L'ensemble de carcasse enroulé 52 et l'ensemble de travail enroulé 50 forment alors un assemblage 58 de forme sensiblement cylindrique autour de l'axe principal A du support 60.

On a représenté sur la figure 13 un schéma analogue à celui de la figure 11 illustrant l'agencement des éléments de renfort filaires 340 de carcasse et des éléments de renfort filaires 180 de travail à l'issue de l'étape de formation de l'ensemble de travail enroulé 50. Sur cette figure 13, on a représenté les angles initiaux A2 et A3.

La direction principale K2 de chaque élément de renfort filaire de travail 180 et la direction principale K3 de chaque élément de renfort filaire de carcasse 340 forment, avec la direction circonférentielle z du support 60, dans une portion AC de l'assemblage 58 comprise axialement entre les bords axiaux 50A, 50B de l'ensemble de travail enroulé 50, des angles initiaux A2 et A3 d'orientations opposées. Ici, la largeur axiale de la portion AC est sensiblement égale à la largeur axiale de l'ensemble de travail enroulé 50. En l'espèce, A2=-35° etA3=+75°.

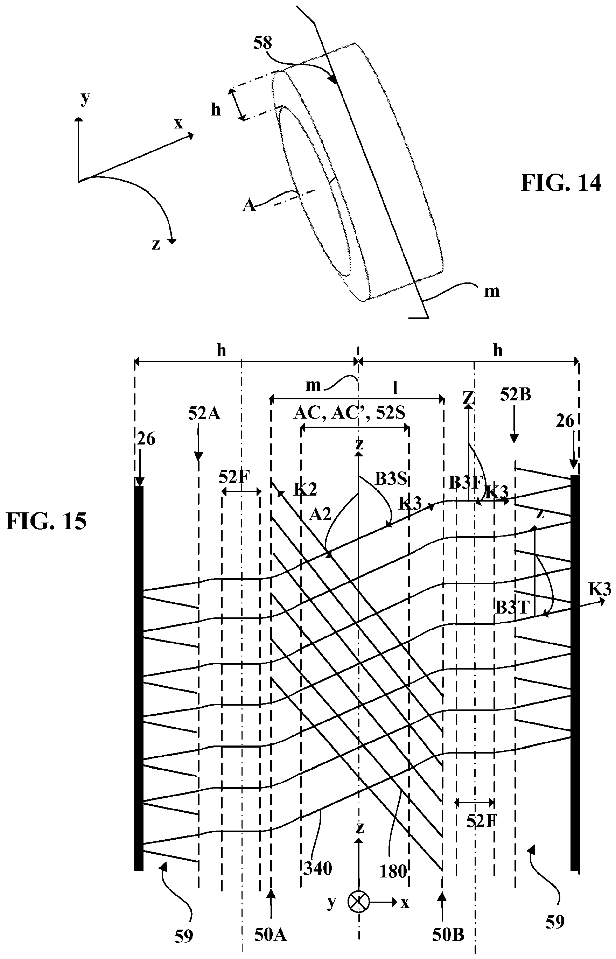

Puis, on déforme l'assemblage 58 de forme sensiblement cylindrique autour de l'axe principal A du support 60 de façon à obtenir l'assemblage 58 de forme sensiblement torique autour de l'axe principal A du support 60. On obtient l'assemblage déformé 58 illustré sur la figure 14. La surface de pose du support 60 présente alors, au niveau du plan médian du support, un rayon égal à 327 mm.

En référence à la figure 15, on déforme l'assemblage 58 de forme sensiblement cylindrique autour de l'axe principal A du support 60 de façon à obtenir un assemblage 58 de forme sensiblement torique autour de l'axe principal A du support 60 de sorte que la direction principale K3 de chaque élément de renfort filaire de carcasse 340 forme, avec la direction circonférentielle z du support 60, un angle final B3S de chaque élément de renfort filaire de carcasse 340, en valeur absolue, strictement inférieur à 80°, dans une portion 52S de l'ensemble de carcasse enroulé 52 s'étendant axialement à l'aplomb radial de l'ensemble de travail enroulé 50. Avantageusement, l'angle final B3S est, en valeur absolue, supérieur ou égal à 10°, de préférence va de 20° à 75° et plus préférentiellement va de 35 à 70°. Ici, B3S=43°. La portion 52S de l'ensemble de carcasse enroulé 52 est destinée à former la portion 34S de la couche de carcasse 34.

La portion 52S de l'ensemble de carcasse enroulé 52 s'étendant axialement à l'aplomb radial de l'ensemble de travail enroulé 50 présente une largeur axiale égale à au moins 40%, de préférence au moins 50% de la largeur axiale I de l'ensemble de travail enroulé 50 et égale à au plus 90%, de préférence au plus 80% de la largeur axiale I de l'ensemble de travail enroulé 50 et, en l'espèce est égale à 60% de la largeur axiale I de l'ensemble de travail enroulé 50. Le plan médian m de l'assemblage 58 coupe cette portion 52S. Plus préférentiellement, cette portion 52S est centrée axialement sur le plan médian m de l'assemblage 58.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, la direction principale K3 de chaque élément de renfort filaire de carcasse 340 forme, avec la direction circonférentielle z du support 60, un angle final B3F de chaque élément de renfort filaire de carcasse 340 allant, en valeur absolue, de 80° à 90°, dans une portion 52F de l'ensemble de carcasse enroulé 52 destinée à s'étendre radialement dans chaque flanc 22 du pneumatique 10. Chaque portion 52F de l'ensemble de carcasse enroulé 52 est destinée à former chaque portion 34F de la couche de carcasse 34.

Chaque portion 52F de l'ensemble de carcasse enroulé 52 destinée à s'étendre radialement dans chaque flanc 22 présente une hauteur radiale égale à au moins 5%, de préférence au moins 15% et encore plus préférentiellement au moins 30% de la hauteur radiale H du pneumatique fabriqué et égale à au plus 80%, de préférence au plus 70% et encore plus préférentiellement au plus 60% de la hauteur radiale H du pneumatique fabriqué, et en l'espèce est égale à 41% de la hauteur radiale H du pneumatique fabriqué. Le plan circonférentiel équatorial e de l'assemblage 58 coupe chaque portion 52F de l'ensemble de carcasse enroulé 52 destinée à être située dans chaque flanc 22.

Lors de l'étape de déformation, l'angle final B3T formé par la direction principale K3 de chaque élément de renfort filaire de carcasse 340, avec la direction circonférentielle z du support 60, dans la portion 59 enroulée de l'ensemble de carcasse enroulé 52, est sensiblement identique à l'angle initial A3 avant l'étape de déformation.

On déforme l'assemblage 58 de forme sensiblement cylindrique autour de l'axe principal A du support 60 de façon à obtenir l'assemblage 58 de forme sensiblement torique autour de l'axe principal A du support 60 également de sorte que, la direction principale K2 de chaque élément de renfort filaire de travail 180 forment, avec la direction circonférentielle z du support 60, un angle final B2 de chaque élément de renfort filaire de travail 180, en valeur absolue, strictement supérieur à 10°. Avantageusement, l'angle final B2 va, en valeur absolue, de 15° à 50°, de préférence de 18° à 30° et ici B2=24°.

La direction principale K2 de chaque élément de renfort filaire de travail 180 et la direction principale K3 de chaque élément de renfort filaire de carcasse 340 forment, avec la direction circonférentielle z du support 60, dans la portion AC de l'assemblage 58 comprise axialement entre les bords axiaux 50A, 50B de l'ensemble de travail enroulé 50, des angles finaux B2 et B3S d'orientations opposées. En l'espèce, B2=-24° et B3S=+43°.

Au cours du procédé, on noie plusieurs éléments de renfort filaires de frettage 170, de préférence adhérisés, dans une matrice élastomérique pour former une nappe de frettage 74.

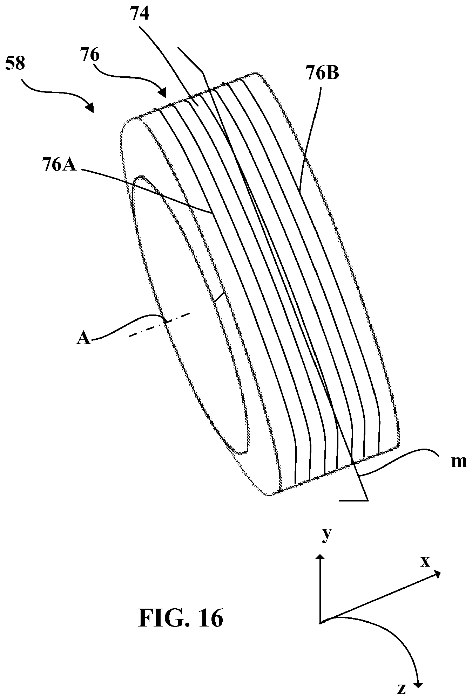

Puis, comme illustré sur la figure 16, on agence, radialement autour de l'assemblage 58 préalablement formé sur le support 60, un ensemble de frettage enroulé 76 destiné à former l'armature de frettage 17. Ici, l'ensemble de frettage enroulé 76 est formé par enroulement hélicoïdal de la nappe de frettage 74 sur une forme torique puis l'ensemble de frettage enroulé 76 est transféré à l'aide d'un anneau de transfert radialement à l'extérieur de l'assemblage 58 préalablement formé. En variante, on pourra directement enrouler circonférentiellement hélicoïdalement la nappe de frettage 74 autour de l'assemblage 58 préalablement formé de façon à former l'ensemble de frettage enroulé 76.

L'ensemble de frettage enroulé 76 développe, sous une force égale à 2 daN/mm, un module tangent M2D allant de 155 à 420 daN/mm. Plus précisément, l'ensemble de frettage 76 développe, sous une force égale à 2 daN/mm, un module tangent M2Dc supérieur ou égal à 210 daN/mm et inférieur ou égal à 368 daN/mm Dans l'exemple illustré, la densité axiale moyenne d'éléments de renfort filaires de frettage 170 dans l'ensemble de frettage enroulé 76 est légèrement inférieure à celle de l'armature de frettage 17, en l'espèce égale à 0,66 éléments par mm, la force égale à 2 daN/mm représente une force équivalente à 3,03 daN/élément de renfort filaire de frettage, ce qui correspond à un module tangent équivalent M2'Dc égal à 4,57 daN/%, soit un module M2Dc égal à 301 daN/mm pour l'ensemble de frettage enroulé 76.

Dans le mode de réalisation illustré, l'ensemble de frettage enroulé 76 présente une largeur axiale plus petite que la largeur axiale de l'ensemble de travail enroulé 50. Ainsi, l'ensemble de frettage enroulé 76 est axialement le moins large des ensembles de travail enroulé 50 et de frettage enroulé 76.

L'angle A1 formé par la direction principale K1 de chaque élément de renfort filaire de frettage 170 avec la direction circonférentielle z du support 60 est, en valeur absolue, inférieur ou égal à 10°, de préférence inférieur ou égal à 7° et plus préférentiellement inférieur ou égal à 5° et ici égal à 5°.

La direction principale K1 de chaque élément de renfort filaire de frettage 170, la direction principale K2 de chaque élément de renfort filaire de travail 180 et la direction principale D3 de chaque élément de renfort filaire de carcasse 340 forment, avec la direction circonférentielle z du support 60, dans une portion AC' de l'assemblage 58 et de l'ensemble de frettage enroulé 76 comprise axialement entre les bords axiaux 76A, 76B de l'ensemble de frettage enroulé 76, des angles deux à deux différents en valeur absolue.

La portion AC' de l'assemblage 58 et de l'ensemble de frettage enroulé comprise axialement entre les bords axiaux 76A, 76B de l'ensemble de frettage enroulé 76 présente une largeur axiale égale à au moins 40%, de préférence au moins 50% de la largeur axiale L de l'ensemble de travail enroulé 50 et au plus 90%, de préférence au plus 80% de la largeur axiale L de l'ensemble de travail enroulé 50 et en l'espèce ici 60% de la largeur axiale L de l'ensemble de travail enroulé 50. Le plan médian m de l'assemblage 58 coupe cette portion AC'. Plus préférentiellement, cette portion AC' est centrée axialement sur le plan médian m de l'assemblage 58.

Puis, on agence, radialement à l'extérieur de l'ensemble de frettage enroulé 76, une bande de matériau polymérique destiné à former la bande de roulement 20, de façon à former une ébauche crue du pneumatique 10. Dans une variante, on pourra agencer radialement à l'extérieur de l'ensemble de frettage 76, la bande de matériau polymérique destiné à former la bande de roulement 20 puis transférer cet ensemble radialement à l'extérieur de l'assemblage 58 préalablement formé sur le support 60. Dans une autre variante, on pourra, après avoir agencé l'ensemble de frettage enroulé 76 radialement autour de l'assemblage 58 préalablement formé sur le support 60, agencer la bande de matériau polymérique destiné à former la bande de roulement 20.

Ensuite, on moule l'ébauche crue du pneumatique 10 formée à partir de l'assemblage préalablement formé 58 et de l'ensemble de frettage enroulé 76, en expansant radialement et circonférentiellement l'ébauche crue de façon à plaquer une surface radialement externe de l'ébauche crue contre une paroi de moulage d'un moule de réticulation.

Puis, on réticule l'ébauche crue dans le moule de réticulation de façon à obtenir le pneumatique 10, par exemple par vulcanisation.

### TESTS COMPARATIFS

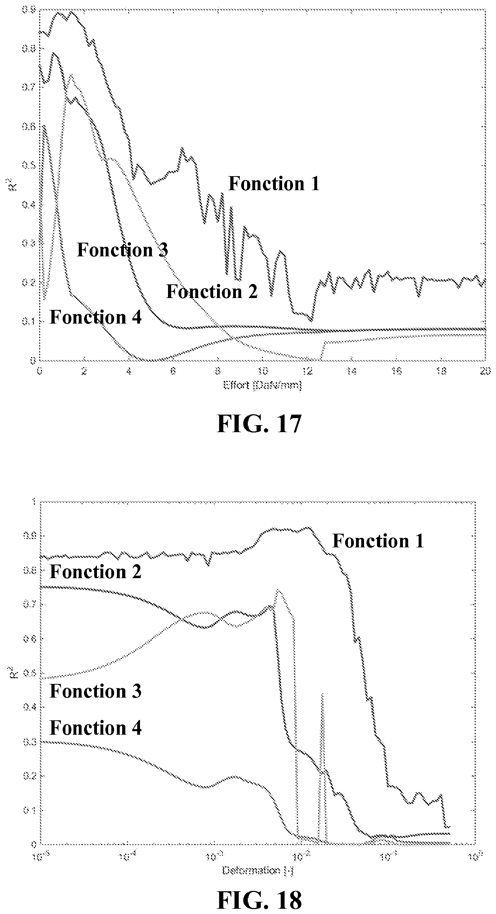

Aux fins de l'invention, on a tout d'abord déterminé le descripteur le plus pertinent pour évaluer la résistance au roulement de pneumatiques comprenant une unique couche de travail. Pour cela, on a corrélé à l'aide de différentes fonctions de corrélation classiquement utilisées par l'homme du métier, par exemple des fonctions linéaires, quadratiques ou cubiques (Fonction 1, Fonction 2, Fonction 3, Fonction 4), la corrélation entre le module tangent de l'armature de frettage et la résistance au roulement simulée sur des pneumatiques comprenant une unique couche de travail analogues au pneumatique 10 décrit ci-dessus et comprenant différents éléments de renfort filaires de frettage. Ainsi, on a réalisé des simulations de résistance au roulement pour des éléments de renfort filaires de frettage ayant différentes valeurs de module tangent. Puis, on a balayé les différents efforts auxquels on peut calculer ce module tangent. Puis, on a cherché à faire passer chaque fonction de corrélation dans le nuage de points de résistance au roulement simulée et on a relevé le coefficient de corrélation R2 pour chacune des fonctions de corrélation à chaque niveau d'effort. On a représenté les résultats de ces simulations sur la figure 17. On a réalisé une démarche analogue en balayant différents allongements auxquels on peut calculer le module tangent. On a représenté les résultats de ces simulations sur la figure 18. A partir de ces figures 17 et 18, on note que le descripteur le plus pertinent est le module tangent M13% à un allongement égal à 1,3% corrélé à l'aide la fonction de corrélation 1.

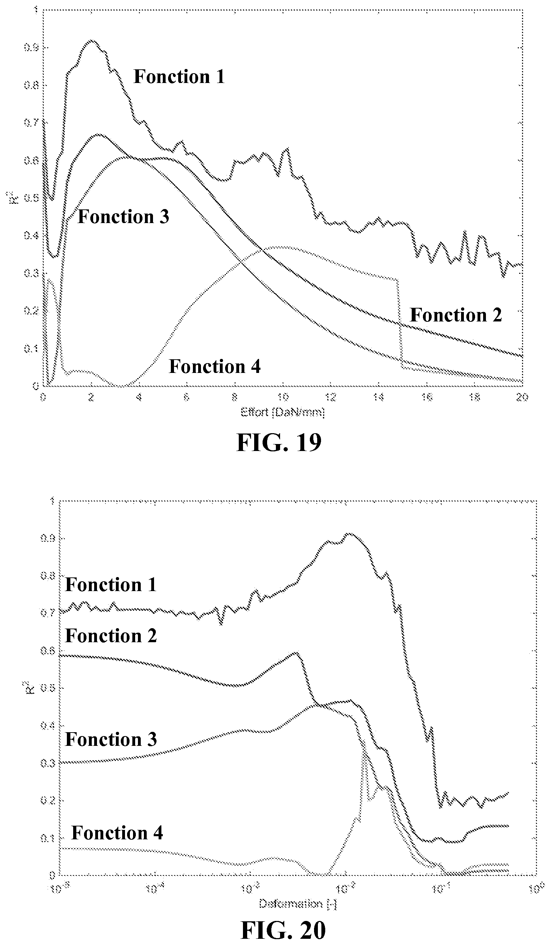

On a reproduit la même démarche pour un pneumatique classique de l'état de la technique comprenant une couche de carcasse comprenant des éléments de renfort filaires de carcasse s'étendant selon une direction principale formant, avec la direction circonférentielle du pneumatique, un angle constant sensiblement égal à 90° et deux couches de travail comprenant des éléments de renfort filaires de travail. La direction principale selon laquelle s'étend chaque élément de renfort filaire de travail de la couche de travail radialement la plus interne et la direction principale selon laquelle s'étend chaque élément de renfort filaire de travail de la couche de travail radialement la plus externe forment, avec la direction circonférentielle du pneumatique, des angles d'orientations opposées et égaux, en valeur absolue à 26°. Les résultats de ces simulations sont représentés sur les figures 19 et 20. On note que le descripteur le plus pertinent est le module tangent M1% à un allongement égal à 1% corrélé à l'aide la fonction de corrélation 1.

On a rassemblé dans le tableau 1 ci-dessous les modules tangents M13% à 1,3 % de neuf éléments de renfort filaires de frettage ainsi que la résistance au roulement RR13 correspondante d'un pneumatique comprenant une unique couche de travail analogue à ceux simulés. On a également rassemblé dans le tableau 1 ci-dessous les modules tangents M1% à 1% d'allongement simulés pour des ensembles de frettage comprenant les mêmes neuf éléments de renfort filaires de frettage ainsi que la résistance au roulement R1 correspondante d'un pneumatique comprenant deux couches de travail analogue à ceux simulés.

L'élément 1 est l'élément de renfort filaire de frettage 170 décrit ci-dessus.

L'élément 2 est constitué de deux brins multifilamentaires de polyamide aromatique de 250 tex chacun et d'un brin multifilamentaire de polyamide aliphatique de 140 tex enroulés individuellement puis ensemble en hélice selon une torsion égale à 300 tours par mètre.

L'élément 3 est constitué de deux brins multifilamentaires de polyamide aromatique de 250 tex chacun et d'un brin multifilamentaire de polyamide aliphatique de 210 tex enroulés individuellement puis ensemble en hélice selon une torsion égale à 300 tours par mètre.

L'élément 4 est constitué de deux brins multifilamentaires de polyamide aromatique de 250 tex chacun et d'un brin multifilamentaire de polyéthylène téréphtalate de 220 tex enroulés individuellement puis ensemble en hélice selon une torsion égale à 300 tours par mètre.

L'élément 5 est constitué de deux brins multifilamentaires de polyamide aromatique de 167 tex chacun et d'un brin multifilamentaire de polyamide aliphatique de 140 tex enroulés individuellement puis ensemble en hélice selon une torsion égale à 360 tours par mètre.

L'élément 6 est constitué de trois brins multifilamentaires de polyéthylène téréphtalate de 440 tex chacun enroulés individuellement puis ensemble en hélice selon une torsion égale à 160 tours par mètre.

Les éléments 7 et 8 présentent une structure de type « Core Insertion » telle que décrite dans WO2019/122621. L'élément 7 comprend un brin d'âme en polyamide aliphatique de 47 tex enroulé individuellement à 340 tours par mètre et trois brins de couche en polyamide aromatique de 167 tex chacun enroulés individuellement à 315 tours par mètre, les brins d'âme et de couche étant enroulés ensemble à 315 tours par mètre. L'élément 8 comprend un brin d'âme en polyamide aliphatique de 47 tex enroulé individuellement à 300 tours par mètre et trois brins de couche en polyamide aromatique de 167 tex chacun enroulés individuellement à 270 tours par mètre, les brins d'âme et de couche étant enroulés ensemble à 270 tours par mètre.

L'élément 9 présente une structure à triple torsion A110/1/2/3 telle que décrite dans WO2019/180367.

**Tableau 1**

| | M13% (daN/mm) | RR13 (kg/t) | M1% (daN/mm) | RR1 (kg/t) |
|---|---|---|---|---|
| Elément 1 | 322 | 5.31 | 314 | 5.91 |
| Elément 2 | 349 | 5.31 | 332 | 5.92 |
| Elément 3 | 226 | 5.34 | 218 | 5.89 |
| Elément 4 | 434 | 5.32 | 398 | 5.95 |
| Elément 5 | 222 | 5.33 | 218 | 5.89 |
| Elément 6 | 297 | 5.32 | 291 | 5.91 |
| Elément 7 | 40 | 5.43 | 36 | 5.95 |
| Elément 8 | 112 | 5.39 | 101 | 5.93 |
| Elément 9 | 935 | 5.39 | 887 | 6.10 |

On note que, dans un pneumatique classique comprenant deux couches de travail, les éléments 1 à 6 ne permettent pas d'obtenir une résistance au roulement significativement améliorée (par significativement améliorée, on entend ici inférieure d'au moins 0,05 kg.t) par rapport aux éléments 7 à 9, et particulièrement par rapport aux éléments 7 et 8. Par contre, et de façon inattendue, ces éléments 1 à 6 permettent d'obtenir une résistance au roulement significativement améliorée (inférieure d'au moins 0,05 kg.t) par rapport aux éléments 7 à 9 dans un pneumatique comprenant une unique couche de travail. Ainsi, même en ayant des modules tangents à 1% d'allongement significativement différents par rapport aux éléments 7 à 9, il était impossible de suspecter que les éléments 1 à 6 pouvaient permettre d'améliorer la résistance au roulement de pneumatiques conformes à l'invention.

On a également reproduit la même démarche afin de déterminer la capacité du pneumatique à atteindre et contenir le volume attendu sous une pression de gonflage prédéterminée. Pour cela, on a, de façon analogue à la résistance au roulement, corrélé à l'aide de différentes fonctions de corrélation (Fonction 1, Fonction 2, Fonction 3, Fonction 4), la corrélation entre le module tangent de l'armature de frettage et l'allongement radial CF de pneumatiques comprenant une unique couche de travail analogue au pneumatique 10 sous une pression de 2,5 bars et comprenant différents éléments de renfort filaires de frettage. On a fait de même avec des pneumatiques comprenant deux couches de travail. Les résultats de cette étude ont montré que :
- le descripteur le plus pertinent pour simuler la capacité d'un pneumatique comprenant une unique couche de travail à atteindre et contenir le volume attendu sous une pression de gonflage prédéterminée était le module tangent M2D à un effort de 2 daN/mm , et
- le descripteur le plus pertinent pour simuler la capacité d'un pneumatique comprenant deux couches de travail à atteindre et contenir le volume attendu sous une pression de gonflage prédéterminée était le module tangent M1D à un effort de 1 daN/mm.

Les résultats de simulation des pneumatiques comprenant les éléments de renfort filaires de frettage 1 à 9 sont rassemblés dans le tableau 2.

**Tableau 2**

| | M2D (daN/mm) | CF2 (mm) | M1D (daN/mm) | CF1 (mm) |
|---|---|---|---|---|
| Elément 1 | 300 | 4.8 | 264 | 2.4 |
| Elément 2 | 315 | 4.8 | 290 | 2.3 |
| Elément 3 | 218 | 4.9 | 195 | 3.3 |
| Elément 4 | 312 | 4.5 | 248 | 2.3 |
| Elément 5 | 216 | 4.9 | 210 | 3.2 |
| Elément 6 | 274 | 4.9 | 283 | 1.1 |
| Elément 7 | 110 | 4.1 | 50 | 8.4 |
| Elément 8 | 131 | 4.5 | 100 | 5.4 |
| Elément 9 | 787 | 2.6 | 715 | 0.8 |

On note que, pour un pneumatique classique comprenant deux couches de travail, les éléments 1 à 6 présentent un risque de ne pas atteindre le volume attendu, notamment par rapport à l'élément 8. Par contre, et de façon inattendue, ces éléments 1 à 6 permettent d'atteindre le volume attendu sans risquer de ne pas le contenir à l'inverse de l'élément 9 qui ne permettrait pas d'obtenir le volume attendu pour un pneumatique comprenant une unique couche de travail. Ainsi, même en ayant des modules tangents à 1% d'allongement significativement différents par rapport aux éléments 7 à 9, il était impossible de suspecter que les éléments 1 à 6 pouvaient permettre d'atteindre et de contenir le volume attendu du pneumatique sous une pression de gonflage prédéterminée.

L'invention ne se limite pas aux modes de réalisation décrits précédemment, seulement au cadre défini par les revendications.

En effet, on pourra notamment mettre en oeuvre l'invention en utilisant deux couches de carcasse au lieu d'une unique couche de carcasse.

En outre, comme pour l'élément 6 décrit ci-dessus, on pourra également envisager une variante dans laquelle le ou chaque élément de renfort filaire de frettage est constitué de trois brins multifilamentaires de polyester. De préférence, dans cette variante, le titre de chaque brin multifilamentaire de polyester va de 300 tex à 500 tex, par exemple est égal à 440 tex et la torsion d'assemblage des trois brins multifilamentaires de polyester autour de l'axe principal commun va de 100 tours par mètre à 250 tours par mètre, par exemple est égale à 160 tours par mètre. Le coefficient de torsion K du ou de chaque élément de renfort filaire de frettage de cette variante va 120 à 260, de préférence de 130 à 200 et encore plus préférentiellement de 130 à 160, par exemple est égal à 156.

## Revendications

1. Pneumatique (10) comprenant un sommet (12), deux flancs (22), deux bourrelets (24), chaque flanc (22) reliant chaque bourrelet (24) au sommet (12), le pneumatique (10) comprenant une armature de carcasse (32) ancrée dans chaque bourrelet (24) et s'étendant dans chaque flanc (22) et radialement intérieurement au sommet (12), l'armature de carcasse (32) comprenant une couche de carcasse (34), le sommet (12) comprenant :
- une bande de roulement (20) destinée à venir en contact avec un sol lors du roulage du pneumatique (10),
- une armature de sommet (14) agencée radialement entre la bande de roulement (20) et l'armature de carcasse (32), l'armature de sommet (14) comprenant :
- une armature de travail (16) comprenant une unique couche de travail (18),
- une armature de frettage (17) agencée radialement à l'extérieur de l'armature de travail (16), l'armature de frettage (17) étant délimitée axialement par deux bords axiaux (17A, 17B) de l'armature de frettage (17) et comprenant au moins un élément de renfort filaire de frettage (170) enroulé circonférentiellement hélicoïdalement de façon à s'étendre axialement d'un bord axial (17A, 17B) à l'autre bord axial (17A, 17B) de l'armature de frettage (17), ou chaque élément de renfort filaire de frettage (170) étant constitué :
- de deux brins multifilamentaires (1701, 1702) de polyamide aromatique ou copolyamide aromatique et d'un brin multifilamentaire (1703) de polyamide aliphatique ou de polyester, ou
- de trois brins multifilamentaires de polyester,
chaque brin multifilamentaire (1701, 1702, 1703) étant enroulé en hélice autour d'un axe principal commun (W) aux trois brins multifilamentaires (1701, 1702, 1703),
**caractérisé en ce que** l'armature de frettage (17) présente un module tangent (M13%) à 1,3% d'allongement allant de 200 à 650 daN/mm, le module tangent à 1,3 % d'allongement étant calculé à partir :
- du module tangent à 1,3 % d'allongement d'un élément de renfort filaire de frettage obtenu à partir d'une courbe force-allongement obtenue en appliquant la norme ASTM D 885/D 885M - 10a de 2014 à l'élément de renfort filaire de frettage extrait du pneumatique, et
- de la densité axiale moyenne d'élément(s) de renfort filaire(s) de frettage égale à :
- dans le cas d'un unique élément de renfort filaire de frettage au nombre moyen de tours de l'élément de renfort filaire de frettage par mm d'armature de frettage ou,
- dans le cas de plusieurs éléments de renfort filaires de frettage, au nombre moyen d'éléments de renfort filaires de frettage par mm d'armature de frettage,
la densité axiale moyenne d'élément(s) de renfort filaire(s) de frettage étant déterminée selon la direction axiale du pneumatique, sur une largeur axiale correspondant à 50% de la largeur axiale du pneumatique, cette largeur axiale étant axialement centrée sur le plan médian du pneumatique.

2. Pneumatique (10) selon la revendication précédente, dans lequel le ou chaque élément de renfort filaire de frettage (170) est constitué de deux brins multifilamentaires (1701, 1702) de polyamide aromatique ou copolyamide aromatique et d'un brin multifilamentaire (1703) de polyamide aliphatique ou de polyester, chaque brin multifilamentaire (1701, 1702, 1703) étant enroulé en hélice autour d'un axe principal commun (W) aux trois brins multifilamentaires (1701, 1702, 1703).

3. Pneumatique (10) selon l'une quelconque des revendications précédentes, dans lequel le rapport du titre total, exprimé en tex, de polyamide aromatique ou copolyamide aromatique sur le titre total, exprimé en tex, du ou de chaque élément de renfort filaire de frettage (170) va de 0,60 à 0,90, de préférence de 0,65 à 0,80.

4. Pneumatique (10) selon l'une quelconque des revendications précédentes, dans lequel l'armature de frettage (17) présente un module tangent (M13%) à 1,3% d'allongement supérieur ou égal à 220 daN/mm.

5. Pneumatique (10) selon l'une quelconque des revendications précédentes, dans lequel l'armature de frettage (17) présente un module tangent (M13%) à 1,3% d'allongement inférieur ou égal à 600 daN/mm, de préférence inférieur ou égal à 500 daN/mm.

6. Pneumatique (10) selon l'une quelconque des revendications précédentes, dans lequel l'armature de frettage (17) développe, sous une force égale à 2 daN/mm, un module tangent (M2D) allant de 150 à 400 daN/mm,
le module tangent (M2D) développé par l'armature de frettage (17) sous une force égale à 2 daN/mm étant calculé à partir :
- d'une courbe force-allongement obtenue en appliquant la norme ASTM D 885/D 885M - 10a de 2014 à un élément de renfort filaire de frettage de l'armature de frettage, et
- de la densité axiale moyenne d'élément(s) de renfort filaire(s) de frettage égale à :
- dans le cas d'un unique élément de renfort filaire de frettage au nombre moyen de tours de l'élément de renfort filaire de frettage par mm d'armature de frettage ou,
- dans le cas de plusieurs éléments de renfort filaires de frettage, au nombre moyen d'éléments de renfort filaires de frettage par mm d'armature de frettage,
la densité axiale moyenne d'élément(s) de renfort filaire(s) de frettage étant déterminée selon la direction axiale du pneumatique, sur une largeur axiale correspondant à 50% de la largeur axiale du pneumatique, cette largeur axiale étant axialement centrée sur le plan médian du pneumatique.

7. Pneumatique (10) selon la revendication précédente, dans lequel l'armature de frettage (17) développe, sous une force égale à 2 daN/mm, un module tangent (M2D) supérieur ou égal à 200 daN/mm.

8. Pneumatique (10) selon la revendication 6 ou 7, dans lequel l'armature de frettage (17) développe, sous une force égale à 2 daN/mm, un module tangent (M2D) inférieur ou égal à 350 daN/mm.

9. Pneumatique (10) selon l'une quelconque des revendications précédentes, dans lequel le coefficient de torsion K du ou de chaque élément de renfort filaire de frettage (170) défini par la relation K=R × [(T / (1000.ρ)]1/2 dans laquelle R est la torsion d'assemblage des trois brins multifilamentaires (1701, 1702, 1703) autour de l'axe principal commun (W), exprimée en tours par mètre, T est le titre total du ou de chaque élément de renfort filaire de frettage (170) exprimé en tex, et ρ est la densité moyenne du matériau constitutif du ou de chaque élément de renfort filaire de frettage (170), va de 140 à 260, de préférence de 180 à 220 et encore plus préférentiellement de 205 à 220, la torsion et le titre étant déterminés selon la norme ASTM D 885/D 885M - 10a de 2014.

10. Pneumatique (10) selon l'une quelconque des revendications précédentes, dans lequel le ou chaque élément de renfort filaire de frettage (170) s'étend axialement d'un bord axial (17A, 17B) à l'autre bord axial (17A, 17B) de l'armature de frettage (17) selon une direction principale (D1) du ou de chaque élément de renfort filaire de frettage (170) formant, avec la direction circonférentielle (Z) du pneumatique (10), un angle (AF), en valeur absolue, inférieur ou égal à 10°, de préférence inférieur ou égal à 7° et plus préférentiellement inférieur ou égal à 5°.

11. Pneumatique (10) selon l'une quelconque des revendications précédentes, dans lequel la couche de travail (18) est délimitée axialement par deux bords axiaux (18A, 18B) de la couche de travail (18) et comprend des éléments de renfort filaires de travail (180) s'étendant axialement d'un bord axial (18A, 18B) à l'autre bord axial (18A, 18B) de la couche de travail (18) les uns sensiblement parallèlement aux autres selon une direction principale (D2) de chaque élément de renfort filaire de travail (180), la direction principale (D2) de chaque élément de renfort filaire de travail (180) de la couche de travail (18) formant, avec la direction circonférentielle (Z) du pneumatique (10), un angle (AT), en valeur absolue, strictement supérieur à 10°, de préférence allant de 15° à 50° et plus préférentiellement de 18° à 30°.

12. Pneumatique (10) selon l'une quelconque des revendications précédentes, dans lequel la ou chaque couche de carcasse (34) est délimitée axialement par deux bords axiaux (34A, 34B) de la ou chaque couche de carcasse (34) et comprend des éléments de renfort filaires de carcasse (340) s'étendant axialement d'un bord axial (34A, 34B) à l'autre bord axial (34A, 34B) de la ou chaque couche de carcasse (34), chaque élément de renfort filaire de carcasse (340) s'étendant selon une direction principale (D3) de chaque élément de renfort filaire de carcasse (340), la direction principale (D3) de chaque élément de renfort filaire de carcasse (340) de la ou chaque couche de carcasse (34) formant, avec la direction circonférentielle (Z) du pneumatique (10):
- un angle (ACS), en valeur absolue, strictement inférieur à 80° dans une portion (34S) de la couche de carcasse (34) s'étendant axialement à l'aplomb radial de la couche de travail (18),
- un angle (ACF), en valeur absolue, allant de 80° à 90° dans au moins une portion (34F) de la couche de carcasse (34) s'étendant radialement dans chaque flanc (22).

13. Pneumatique (10) selon la revendication précédente, dans lequel la direction principale (D3) de chaque élément de renfort filaire de carcasse (340) forme, avec la direction circonférentielle (Z) du pneumatique (10), un angle (ACS), en valeur absolue, supérieur ou égal à 10°, de préférence allant de 20° à 75° et plus préférentiellement allant de 35° à 70°, dans la portion (34S) de la couche de carcasse (34) s'étendant axialement à l'aplomb radial de la couche de travail (18).

14. Procédé de fabrication d'un pneumatique (10) selon l'une quelconque des revendications précédentes, dans lequel:
- on forme par enroulement d'une nappe de carcasse (51) ou de plusieurs nappes de carcasse (51) autour d'un support (60) présentant une forme sensiblement cylindrique autour d'un axe principal (A), un ou plusieurs ensemble(s) de carcasse enroulé(s) (52), le ou les ensemble(s) de carcasse enroulé(s) (52) étant destiné(s) à former la ou les couche(s) de carcasse (34),
- on forme par enroulement d'une nappe de travail (49) ou de plusieurs nappes de travail (50), radialement à l'extérieur du ou des ensemble(s) de carcasse enroulé(s) (52), un ensemble de travail enroulé (50) destiné à former la couche de travail (18),
le ou les ensemble(s) de carcasse enroulé(s) (52) et l'ensemble de travail enroulé (50) formant un assemblage (58) de forme sensiblement cylindrique autour de l'axe principal (A) du support (60)
- on déforme l'assemblage (58) de forme sensiblement cylindrique autour de l'axe principal (A) du support (60) de façon à obtenir un assemblage (58) de forme sensiblement torique autour de l'axe principal (A) du support (60),
postérieurement à l'étape de déformation, on agence, radialement autour de l'assemblage (58) de forme sensiblement torique autour de l'axe principal (A) du support (60), un ensemble de frettage enroulé (76) destiné à former l'armature de frettage (17), l'ensemble de frettage enroulé (76) étant formé par enroulement hélicoïdal du ou de chaque l'élément de renfort filaire de frettage (170) ou d'une nappe de frettage (74) obtenue par noyage du ou de chaque élément de renfort filaire de frettage (170) dans une matrice élastomérique.

## Patentansprüche

1. Reifen (10) umfassend einen Scheitel (12), zwei Flanken (22), zwei Wülste (24), wobei jede Flanke (22) jeden Wulst (24) mit dem Scheitel (12) verbindet, wobei der Reifen (10) eine Karkassenbewehrung (32) umfasst, die in jedem Wulst (24) verankert ist und sich in jeder Flanke (22) und radial innerhalb zum Scheitel (12) erstreckt, wobei die Karkassenbewehrung (32) eine Karkassenschicht (34) umfasst, wobei der Scheitel (12) Folgendes umfasst:
- einen Laufstreifen (20), der dazu bestimmt ist, beim Rollen des Reifens (10) mit einem Boden in Kontakt zu treten,
- eine Scheitelbewehrung (14), die radial zwischen dem Laufstreifen (20) und der Karkassenbewehrung (32) angeordnet ist, wobei die Scheitelbewehrung (14) Folgendes umfasst:
- eine Arbeitsbewehrung (16), die eine einzige Arbeitsschicht (18) umfasst,
- eine Umreifungsbewehrung (17), die radial außerhalb der Arbeitsbewehrung (16) angeordnet ist, wobei die Umreifungsbewehrung (17) axial von zwei axialen Rändern (17A, 17B) der Umreifungsbewehrung (17) begrenzt ist und wenigstens ein Umreifungs-Fadenverstärkungselement (170) umfasst, das in Umfangsrichtung spiralförmig gewickelt ist, so dass es sich axial von einem axialen Rand (17A, 17B) zum anderen axialen Rand (17A, 17B) der Umreifungsbewehrung (17) erstreckt, wobei das oder jedes Umreifungs-Fadenverstärkungselement (170) von Folgendem gebildet ist:
- von zwei Multifilamentsträngen (1701, 1702) aus aromatischem Polyamid oder aromatischem Copolyamid und einem Multifilamentstrang (1703) aus aliphatischem Polyamid oder Polyester, oder
- von drei Multifilamentsträngen aus Polyester, wobei jeder Multifilamentstrang (1701, 1702, 1703) spiralförmig um eine für die drei Multifilamentstränge (1701, 1702, 1703) gemeinsame Hauptachse (W) gewickelt ist,
**dadurch gekennzeichnet, dass** die Umreifungsbewehrung (17) einen Tangentenmodul (M13%) bei 1,3 % Dehnung von 200 bis 650 daN/mm aufweist, wobei der Tangentenmodul bei 1,3 % Dehnung anhand von Folgendem berechnet wird:
- des Tangentenmoduls bei 1,3 % Dehnung eines Umreifungs-Fadenverstärkungselements, der anhand einer Kraft-Dehnungs-Kurve erhalten wird, die unter Anwendung der Norm ASTM D 885/D 885M - 10a von 2014 auf das aus dem Reifen entnommene Umreifungs-Fadenverstärkungselement erhalten wird, und
- der mittleren axialen Dichte von Umreifungs-Fadenverstärkungselement(en), die gleich Folgendem ist:
- im Falle eines einzigen Umreifungs-Fadenverstärkungselements, der mittleren Anzahl von Umdrehungen des Umreifungs-Fadenverstärkungselements pro mm Umreifungsbewehrung, oder,
- im Falle mehrerer Umreifungs-Fadenverstärkungselemente, der mittleren Anzahl von Umreifungs-Fadenverstärkungselementen pro mm Umreifungsbewehrung,
wobei die mittlere axiale Dichte von Umreifungs-Fadenverstärkungselement(en) in der Axialrichtung des Reifens bestimmt wird, über eine axiale Breite, die 50 % der axialen Breite des Reifens entspricht, wobei diese axiale Breite in der Mittelebene des Reifens axial zentriert ist.

2. Reifen (10) nach dem vorhergehenden Anspruch, wobei das oder jedes Umreifungs-Fadenverstärkungselement (170) von zwei Multifilamentsträngen (1701, 1702) aus aromatischem Polyamid oder aromatischem Copolyamid und einem Multifilamentstrang (1703) aus aliphatischem Polyamid oder Polyester gebildet ist, wobei jeder Multifilamentstrang (1701, 1702, 1703) spiralförmig um eine für die drei Multifilamentstränge (1701, 1702, 1703) gemeinsame Hauptachse (W) gewickelt ist.

3. Reifen (10) nach einem der vorhergehenden Ansprüche, wobei das Verhältnis des in tex ausgedrückten Gesamttiters von aromatischem Polyamid oder aromatischem Copolyamid zum in tex ausgedrückten Gesamttiter des oder jedes Umreifungs-Fadenverstärkungselements (170) von 0,60 bis 0,90, vorzugsweise von 0,65 bis 0,80 beträgt.

4. Reifen (10) nach einem der vorhergehenden Ansprüche, wobei die Umreifungsbewehrung (17) einen Tangentenmodul (M13%) bei 1,3 % Dehnung von größer als oder gleich 220 daN/mm aufweist.

5. Reifen (10) nach einem der vorhergehenden Ansprüche, wobei die Umreifungsbewehrung (17) einen Tangentenmodul (M13%) bei 1,3 % % Dehnung von kleiner als oder gleich 600 daN/mm, vorzugsweise kleiner als oder gleich 500 daN/mm aufweist.

6. Reifen (10) nach einem der vorhergehenden Ansprüche, wobei die Umreifungsbewehrung (17) unter einer Kraft, die gleich 2 daN/mm ist, einen Tangentenmodul (M2D) von 150 bis 400 daN/mm entwickelt,
wobei der Tangentenmodul (M2D), der von der Umreifungsbewehrung (17) unter einer Kraft entwickelt wird, die gleich 2 daN/mm ist, anhand von Folgendem berechnet wird:
- einer Kraft-Dehnungs-Kurve, die unter Anwendung der Norm ASTM D 885/D 885M - 10a von 2014 auf ein Umreifungs-Fadenverstärkungselement der Umreifungsbewehrung angewandt wird, und
- der mittleren axialen Dichte von Umreifungs-Fadenverstärkungselement(en), die gleich Folgendem ist:
- im Falle eines einzigen Umreifungs-Fadenverstärkungselements, der mittleren Anzahl von Umdrehungen des Umreifungs-Fadenverstärkungselements pro mm Umreifungsbewehrung, oder,
- im Falle mehrerer Umreifungs-Fadenverstärkungselemente, der mittleren Anzahl von Umreifungs-Fadenverstärkungselementen pro mm Umreifungsbewehrung,
wobei die mittlere axiale Dichte von Umreifungs-Fadenverstärkungselement(en) in der Axialrichtung des Reifens bestimmt wird, über eine axiale Breite, die 50 % der axialen Breite des Reifens entspricht, wobei diese axiale Breite in der Mittelebene des Reifens axial zentriert ist.

7. Reifen (10) nach dem vorhergehenden Anspruch, wobei die Umreifungsbewehrung (17) unter einer Kraft, die gleich 2 daN/mm ist, einen Tangentenmodul (M2D) größer als oder gleich 200 daN/mm entwickelt.

8. Reifen (10) nach Anspruch 6 oder 7, wobei die Umreifungsbewehrung (17) unter einer Kraft, die gleich 2 daN/mm ist, einen Tangentenmodul (M2D) kleiner als oder gleich 350 daN/mm entwickelt.

9. Reifen (10) nach einem der vorhergehenden Ansprüche, wobei der Drehungskoeffizient K des oder jedes Umreifungs-Fadenverstärkungselements (170), der durch das Verhältnis K= R × [(T / (1000.p)]1/2 festgelegt ist, wobei R die Schutzdrehung der drei Multifilamentstränge (1701, 1702, 1703) um die gemeinsame Hauptachse (W) ist, die in Umdrehungen pro Meter ausgedrückt wird, T der Gesamttiter des oder jedes Umreifungs-Fadenverstärkungselements (170) ist, der in tex ausgedrückt wird, und p die mittlere Dichte des Materials ist, das das oder jedes Umreifungs-Fadenverstärkungselement (170) bildet, von 140 bis 260, vorzugsweise von 180 bis 220 und besser noch von 205 bis 220 beträgt, wobei die Drehung und der Titer nach der Norm ASTM D 885/D 885M - 10a von 2014 bestimmt werden.

10. Reifen (10) nach einem der vorhergehenden Ansprüche, wobei sich das oder jedes Umreifungs-Fadenverstärkungselement (170) axial von einem axialen Rand (17A, 17B) zum anderen axialen Rand (17A, 17B) der Umreifungsbewehrung (17) in einer Hauptrichtung (D1) des oder jedes Umreifungs-Fadenverstärkungselements (170) erstreckt, die mit der Umfangsrichtung (Z) des Reifens (10) einen Winkel (AF) bildet, der im Absolutwert kleiner als oder gleich 10°, vorzugsweise kleiner als oder gleich 7° und besser noch kleiner als oder gleich 5° ist.

11. Reifen (10) nach einem der vorhergehenden Ansprüche, wobei die Arbeitsschicht (18) axial von zwei axialen Rändern (18A, 18B) der Arbeitsschicht (18) begrenzt ist und Arbeits-Fadenverstärkungselemente (180) umfasst, die sich axial von einem axialen Rand (18A, 18B) zum anderen axialen Rand (18A, 18B) der Arbeitsschicht (18) erstrecken, die im Wesentlichen parallel zueinander in einer Hauptrichtung (D2) jedes Arbeits-Fadenverstärkungselements (180) verlaufen, wobei die Hauptrichtung (D2) jedes Arbeits-Fadenverstärkungselements (180) der Arbeitsschicht (18) mit der Umfangsrichtung (Z) des Reifens (10) einen Winkel (AT) bildet, der im Absolutwert streng größer als 10° ist, vorzugsweise von 15° bis 50° und besser noch von 18° bis 30° beträgt.

12. Reifen (10) nach einem der vorhergehenden Ansprüche, wobei die oder jede Karkassenschicht (34) axial von zwei axialen Rändern (34A, 34B) der oder jeder Karkassenschicht (34) begrenzt ist und Karkassen-Fadenverstärkungselemente (340) umfasst, die sich axial von einem axialen Rand (34A, 34B) zum anderen axialen Rand (34A, 34B) der oder jeder Karkassenschicht (34) erstrecken, wobei sich jedes Karkassen-Fadenverstärkungselement (340) in einer Hauptrichtung (D3) jedes Karkassen-Fadenverstärkungselements (340) erstreckt, wobei die Hauptrichtung (D3) jedes Karkassen-Fadenverstärkungselements (340) der oder jeder Karkassenschicht (34) mit der Umfangsrichtung (Z) des Reifens (10) Folgendes bildet:
- einen Winkel (ACS), der im Absolutwert streng kleiner als 80° ist, in einem Abschnitt (34S) der Karkassenschicht (34), der sich axial senkrecht zur Arbeitsschicht (18) erstreckt,
- einen Winkel (ACF), der im Absolutwert von 80° bis 90° beträgt, in wenigstens einem Abschnitt (34F) der Karkassenschicht (34), der sich radial in jeder Flanke (22) erstreckt.

13. Reifen (10) nach dem vorhergehenden Anspruch, wobei die Hauptrichtung (D3) jedes Karkassen-Fadenverstärkungselements (340) mit der Umfangsrichtung (Z) des Reifens (10) einen Winkel (ACS), der im Absolutwert größer als oder gleich 10° ist, vorzugsweise von 20° bis 75° und besser noch von 35° bis 70° beträgt, in einem Abschnitt (34S) der Karkassenschicht (34) bildet, der sich axial senkrecht zur Arbeitsschicht (18) erstreckt.

14. Verfahren zur Herstellung eines Reifens (10) nach einem der vorhergehenden Ansprüche, wobei:
- durch Wicklung einer Karkassenlage (51) oder mehrerer Karkassenlagen (51) um einen Träger (60), der eine im Wesentlichen zylindrische Form um eine Hauptachse (A) aufweist, eine oder mehrere gewickelte Karkassenanordnung(en) (52) gebildet wird bzw. werden, wobei die gewickelten Karkassenanordnung(en) (52) dazu bestimmt ist bzw. sind, die Karkassenschicht(en) (34) zu bilden,
- durch Wicklung einer Arbeitslage (49) oder mehrerer Arbeitslagen (50) radial außerhalb der gewickelten Karkassenanordnung(en) (52) eine gewickelte Arbeitsanordnung (50) gebildet wird, die dazu bestimmt ist, die Arbeitsschicht (18) zu bilden,
wobei die gewickelte(n) Karkassenanordnung(en) (52) und die gewickelte Arbeitsanordnung (50) einen Verbund (58) mit im Wesentlichen zylindrischer Form um die Hauptachse (A) des Trägers (60) bildet
- der Verbund (58) mit im Wesentlichen zylindrischer Form um die Hauptachse (A) des Trägers (60) so verformt wird, dass ein Verbund (58) mit im Wesentlichen torischer Form um die Hauptachse (A) des Trägers (60) erhalten wird,
nach dem Schritt des Verformens radial um den Verbund (58) mit im Wesentlichen torischer Form um die Hauptachse (A) des Trägers (60) eine gewickelte Umreifungsanordnung (76) angeordnet wird, die dazu bestimmt ist, die Umreifungsbewehrung (17) zu bilden, wobei die gewickelte Umreifungsanordnung (76) durch spiralförmiges Wickeln des oder jedes Umreifungs-Fadenverstärkungselements (170) oder einer Umreifungslage (74) gebildet wird, die durch Einbetten des oder jedes Umreifungs-Fadenverstärkungselements (170) in eine Elastomermatrix erhalten wird.

## Claims

1. Tyre (10) comprising a crown (12), two sidewalls (22) and two beads (24), each sidewall (22) connecting each bead (24) to the crown (12), the tyre (10) comprising a carcass reinforcement (32) anchored in each bead (24) and extending in each sidewall (22) and radially internally at the crown (12), the carcass reinforcement (32) comprising a carcass layer (34), the crown (12) comprising:
- a tread (20) intended to come into contact with the ground when the tyre (10) is rolling,
- a crown reinforcement (14) arranged radially between the tread (20) and the carcass reinforcement (32), the crown reinforcement (14) comprising:
- a working reinforcement (16) comprising a single working layer (18),
- a hoop reinforcement (17) arranged radially outside the working reinforcement (16), the hoop reinforcement (17) being axially delimited by two axial edges (17A, 17B) of the hoop reinforcement (17) and comprising at least one hooping filamentary reinforcing element (170) wound circumferentially helically so as to extend axially from one axial edge (17A, 17B) to the other axial edge (17A, 17B) of the hoop reinforcement (17),
the or each hooping filamentary reinforcing element (170) consisting of:
- two multifilament strands (1701, 1702) of aromatic polyamide or aromatic copolyamide and one multifilament strand (1703) of aliphatic polyamide or of polyester, or
- three polyester multifilament strands,
each multifilament strand (1701, 1702, 1703) being wound in a helix around a main axis (W) common to the three multifilament strands (1701, 1702, 1703),
**characterized in that** the hoop reinforcement (17) has a tangent modulus (M13%) at 1.3% elongation ranging from 200 to 650 daN/mm, the tangent modulus at 1.3% elongation being calculated from:
- the tangent modulus at 1.3% elongation of a hooping filamentary reinforcing element obtained from a force-elongation curve obtained by applying the standard ASTM D 885/D 885M - 10a of 2014 to the hooping filamentary reinforcing element extracted from the tyre, and
- the average axial density of hooping filamentary reinforcing element(s) equal to:
∘ in the case of a single hooping filamentary reinforcing element, to the average number of turns of the hooping filamentary reinforcing element per mm of hoop reinforcement or,
∘ in the case of a plurality of hooping filamentary reinforcing elements, to the average number of hooping filamentary reinforcing elements per mm of hoop reinforcement,
the average axial density of hooping filamentary reinforcing element(s) being determined in the axial direction of the tyre, over an axial width corresponding to 50% of the axial width of the tyre, this axial width being axially centred on the median plane of the tyre.

2. Tyre (10) according to the preceding claim, in which the or each hooping filamentary reinforcing element (170) consists of two multifilament strands (1701, 1702) of aromatic polyamide or aromatic copolyamide and of one multifilament strand (1703) of aliphatic polyamide or of polyester, each multifilament strand (1701, 1702, 1703) being wound in a helix around a main axis (W) common to the three multifilament strands (1701, 1702, 1703).

3. Tyre (10) according to either one of the preceding claims, in which the ratio of the total count, expressed in tex, of aromatic polyamide or aromatic copolyamide to the total count, expressed in tex, of the or each hooping filamentary reinforcing element (170) ranges from 0.60 to 0.90, preferably from 0.65 to 0.80.

4. Tyre (10) according to any one of the preceding claims, in which the hoop reinforcement (17) has a tangent modulus (M13%) at 1.3% elongation greater than or equal to 220 daN/mm.

5. Tyre (10) according to any one of the preceding claims, in which the hoop reinforcement (17) has a tangent modulus (M13%) at 1.3% elongation less than or equal to 600 daN/mm, preferably less than or equal to 500 daN/mm.

6. Tyre (10) according to any one of the preceding claims, in which the hoop reinforcement (17) develops, under a force equal to 2 daN/mm, a tangent modulus (M2D) ranging from 150 to 400 daN/mm,
the tangent modulus (M2D) developed by the hoop reinforcement (17) under a force equal to 2 daN/mm being calculated from:
- a force-elongation curve obtained by applying the standard ASTM D 885/D 885M - 10a of 2014 to a hooping filamentary reinforcing element of the hoop reinforcement (17), and
- the average axial density of hooping filamentary reinforcing element(s) equal to:
∘ in the case of a single hooping filamentary reinforcing element, to the average number of turns of the hooping filamentary reinforcing element per mm of hoop reinforcement or,
∘ in the case of a plurality of hooping filamentary reinforcing elements, to the average number of hooping filamentary reinforcing elements per mm of hoop reinforcement,
the average axial density of hooping filamentary reinforcing element(s) being determined in the axial direction of the tyre, over an axial width corresponding to 50% of the axial width of the tyre, this axial width being axially centred on the median plane of the tyre.

7. Tyre (10) according to the preceding claim, in which the hoop reinforcement (17) develops, under a force equal to 2 daN/mm, a tangent modulus (M2D) greater than or equal to 200 daN/mm.

8. Tyre (10) according to Claim 6 or 7, in which the hoop reinforcement (17) develops, under a force equal to 2 daN/mm, a tangent modulus (M2D) less than or equal to 350 daN/mm.

9. Tyre (10) according to any one of the preceding claims, in which the twist coefficient K of the or each hooping filamentary reinforcing element (170) defined by the relation K = R × [(T / (1000.ρ)]1/2, where R is the assembly twist of the three multifilament strands (1701, 1702, 1703) around the common main axis (W), expressed in turns per metre, T is the total count of the or each hooping filamentary reinforcing element (170) expressed in tex, and ρ is the average density of the material constituting the or each hooping filamentary reinforcing element (170), ranges from 140 to 260, preferably from 180 to 220 and even more preferably from 205 to 220, the twist and the count being determined according to the standard ASTM D 885/D 885M - 10a of 2014.

10. Tyre (10) according to any one of the preceding claims, in which the or each hooping filamentary reinforcing element (170) extends axially from one axial edge (17A, 17B) to the other axial edge (17A, 17B) of the hoop reinforcement (17) in a main direction (D1) of the or each hooping filamentary reinforcing element (170) forming, with the circumferential direction (Z) of the tyre (10), an angle (AF), in absolute value, less than or equal to 10°, preferably less than or equal to 7° and more preferably less than or equal to 5°.

11. Tyre (10) according to any one of the preceding claims, in which the working layer (18) is delimited axially by two axial edges (18A, 18B) of the working layer (18) and comprises working filamentary reinforcing elements (180) extending axially from one axial edge (18A, 18B) to the other axial edge (18A, 18B) of the working layer (18) substantially parallel to one another in a main direction (D2) of each working filamentary reinforcing element (180), the main direction (D2) of each working filamentary reinforcing element (180) of the working layer (18) forming, with the circumferential direction (Z) of the tyre (10), an angle (AT), in absolute value, strictly greater than 10°, preferably ranging from 15° to 50° and more preferably from 18° to 30°.

12. Tyre (10) according to any one of the preceding claims, in which the or each carcass layer (34) is delimited axially by two axial edges (34A, 34B) of the or each carcass layer (34) and comprises carcass filamentary reinforcing elements (340) extending axially from one axial edge (34A, 34B) to the other axial edge (34A, 34B) of the or each carcass layer (34), each carcass filamentary reinforcing element (340) extending in a main direction (D3) of each carcass filamentary reinforcing element (340), the main direction (D3) of each carcass filamentary reinforcing element (340) of the or each carcass layer (34) forming, with the circumferential direction (Z) of the tyre (10):
- an angle (ACS), in absolute value, strictly less than 80° in a portion (34S) of the carcass layer (34) extending axially in radial line with the working layer (18),
- an angle (ACF), in absolute value, ranging from 80° to 90° in at least one portion (34F) of the carcass layer (34) extending radially in each sidewall (22).

13. Tyre (10) according to the preceding claim, in which the main direction (D3) of each carcass filamentary reinforcing element (340) forms, with the circumferential direction (Z) of the tyre (10), an angle (ACS), in absolute value, greater than or equal to 10°, preferably ranging from 20° to 75° and more preferably ranging from 35° to 70°, in the portion (34S) of the carcass layer (34) extending axially in radial line with the working layer (18).

14. Method for producing a tyre (10) according to any one of the preceding claims, in which:
- there is formed, by winding a carcass ply (51) or a plurality of carcass plies (51) around a support (60) having a substantially cylindrical shape around a main axis (A), one or more wound carcass assembly(ies) (52), the wound carcass assembly(ies) (52) being intended to form the carcass layer(s) (34),
- there is formed, by winding a working ply (49) or a plurality of working plies (50), radially outside the wound carcass assembly(ies) (52), a wound working assembly (50) intended to form the working layer (18),
the wound carcass assembly(ies) (52) and the wound working assembly (50) forming an assembly (58) of substantially cylindrical shape around the main axis (A) of the support (60),
- the assembly (58) of substantially cylindrical shape around the main axis (A) of the support (60) is deformed so as to obtain an assembly (58) of substantially toric shape around the main axis (A) of the support (60),
after the deformation step, there is arranged, radially around the assembly (58) of substantially toric shape around the main axis (A) of the support (60), a wound hooping assembly (76) intended to form the hoop reinforcement (17), the wound hooping assembly (76) being formed by helical winding of the or each hooping filamentary reinforcing element (170) or of a hooping ply (74) obtained by embedding the or each hooping filamentary reinforcing element (170) in an elastomeric matrix.
